# EUROPÄISCHE PATENTSCHRIFT

(11) **EP 2 679 352 B1**
(45) Veröffentlichungstag und Bekanntmachung des Hinweises auf die Patenterteilung: **22.12.2021**
(21) Anmeldenummer: 13003101.6
(22) Anmeldetag: 18.06.2013
(51) Int. Cl.: B25J 19/02, G06T 1/00, B65G 47/14

(54) **Vorrichtung zum automatisierten Entnehmen von in einem Behälter angeordneten Werkstücken**
Device for the automated removal of workpieces arranged in a container
Dispositif de prélèvement automatisée de pièces agencées dans un récipient

(30) Priorität: 29.06.2012 DE 102012013030
(43) Veröffentlichungstag der Anmeldung: 01.01.2014
(73) Patentinhaber: LIEBHERR-VERZAHNTECHNIK GmbH, 87437 Kempten (DE)
(72) Erfinder: Mattern, Thomas, 87669 Rieden (DE); Hänschke, David, 87452 Altusried (DE); Riedmiller, Bernhard, 87497 Wertach (DE); Mundt, Alois, 87435 Kempten (DE)
(74) Vertreter: Laufhütte, Dieter

(56) Entgegenhaltungen:
- EP-A1- 0 613 841
- EP-A2- 1 992 561
- EP-A2- 2 364 823
- EP-A2- 2 578 365
- WO-A1-2010/096850
- WO-A1-2013/002099
- DE-A1-102008 025 857
- JP-A- H11 123 681
- JP-A- 2010 120 716
- JP-A- 2011 000 685
- US-A- 4 017 721
- US-A- 4 412 293
- US-A1- 2009 116 940
- None

## Beschreibung

Die vorliegende Erfindung betrifft eine Vorrichtung zum automatisierten Entnehmen von in einem Behälter angeordneten Werkstücken, mit einer ersten Objekterkennungseinrichtung zum Erfassen der Werkstücke und einem ersten Greifer zum Greifen und Entnehmen der Werkstücke aus dem Behälter, und einer Steuerung zur Auswertung der Daten der ersten Objekterkennungseinrichtung, zur Bahnplanung und zur Steuerung des ersten Greifers. Die Steuerung kann dabei insbesondere eine Auswerteeinrichtung zur Auswertung der Daten, ein Bahnplanungsmodul zur Bahnplanung und eine Steuerungseinheit zur Steuerung des Greifers umfassen.

Solche Systeme, bei welchen ein Behälter mit (üblicherweise ungeordnet angeordneten) Werkstücken automatisiert, beispielsweise durch Einsatz eines Roboters, entleert wird, sind unter der Bezeichnung "Griff in die Kiste" bekannt geworden. Dabei werden die im Behälter angeordneten Werkstücke durch die Objekterkennungseinrichtung erfasst und der Greifer wird anhand der Daten zu den erfassten Werkstücken so angesteuert, dass er die Werkstücke greift und einzeln aus dem Behälter entnimmt.

Bisher sind die meisten Vorrichtungen zum "Griff in die Kiste" allerdings über ein experimentelles Stadium noch nicht herausgekommen, da vielfältige Probleme bei der Prozesssicherheit, der Prozessgeschwindigkeit und der Genauigkeit zu bewältigen sind.

Druckschriften EP 2 364 823 A2 und JP 2011 000685 A zeigen Vorrichtungen zum automatisierten Entnehmen von in einem Behälter angeordneten Werkstücken gemäß dem Oberbegriff von Anspruch 1.

Aufgabe der vorliegenden Erfindung ist es daher, eine Vorrichtung zum automatisierten Entnehmen von in einem Behälter angeordneten Werkstücken zur Verfügung zu stellen, welche im Hinblick auf Prozesssicherheit, Geschwindigkeit und/oder Genauigkeit verbesserte Eigenschaften aufweist.

Diese Aufgabe wird erfindungsgemäß durch eine Vorrichtung gemäß Anspruch 1 gelöst.

Bevorzugte Ausführungen der vorliegenden Erfindung sind Gegenstand der Unteransprüche.

Die vorliegende Erfindung zeigt eine Vorrichtung zum automatisierten Entnehmen von in einem Behälter angeordneten Werkstücken, mit einer ersten Objekterkennungseinrichtung zum Erfassen der Werkstücke und einem ersten Greifer zum Greifen und Entnehmen der Werkstücke aus dem Behälter, und einer Steuerung zur Auswertung der Daten der ersten Objekterkennungseinrichtung, zur Bahnplanung und zur Ansteuerung des ersten Greifers. Die Steuerung kann dabei insbesondere eine Auswerteeinrichtung zur Auswertung der Daten, ein Bahnplanungsmodul zur Bahnplanung und eine Steuerungseinheit zur Steuerung des Greifers umfassen. Erfindungsgemäß ist dabei eine Zwischenstation vorgesehen, auf welcher der erste Greifer die Werkstücke nach dem Entnehmen aus dem Behälter ablegt, und eine Positioniervorrichtung, welche die Werkstücke ausgehend von der Zwischenstation genauer positioniert und/oder vereinzelt.

Durch den Einsatz einer erfindungsgemäßen Zwischenstation muss der erste Greifer die Werkstücke beim Entnehmen aus dem Behälter noch nicht mit der für die Weiterverarbeitung der Werkstücke notwendigen End-Genauigkeit greifen bzw. ablegen, was das Entleeren des Behälters erheblich vereinfacht und die Prozesszeiten erhöht. Weiterhin muss bei dem Entnehmen der Werkstücke aus dem Behälter auch noch nicht sichergestellt werden, dass die Werkstücke komplett und zuverlässig vereinzelt werden. Vielmehr wird die Zwischenstation erfindungsgemäß dazu eingesetzt, um die Werkstücke genauer zu positionieren und ggf. endgültig zu vereinzeln.

Insbesondere kann die erfindungsgemäße Vorrichtung dabei zum Entnehmen von ungeordnet im Behälter angeordneten Werkstücken dienen, da die Position der Werkstücke durch eine geeignete Objekterkennungseinrichtung ermittelt werden kann und daher nicht vorab bekannt sein muss. Selbstverständlich kann die Vorrichtung jedoch auch dann eingesetzt werden, wenn die Werkstücke bereits mit einer gewissen Ordnung im Behälter vorliegen.

Insbesondere kann die erfindungsgemäße Vorrichtung dabei der automatisierten Anordnung der Werkstücke an einer Zielaufnahme dienen, wobei die Steuerung die Positioniervorrichtung so ansteuert, dass die Werkstücke von der Zwischenstation aus mit einer größerer Genauigkeit an der Zielaufnahme angeordnet werden, als sie auf der Zwischenstation abgelegt wurden.

Die Erfinder der vorliegenden Erfindung haben dabei erkannt, dass erst durch Einsatz einer solchen Zwischenstation die bei industriellen Anwendungen notwendige Prozesssicherheit, Genauigkeit und Geschwindigkeit erreicht werden kann.

Vorteilhafterweise kann dabei als erster Greifer zum Greifen der Werkstücke im Behälter ein beliebiger Greifer eingesetzt werden, insbesondere ein mechanischer, magnetischer und/oder pneumatischer Greifer.

Besonders bevorzugt wird als erster Greifer zum Greifen des Werkstückes im Behälter jedoch ein magnetischer und/oder pneumatischer Greifer eingesetzt. Solche magnetischen und/oder pneumatischen Greifer können dabei insbesondere auch bei der Handhabung von Werkstücken mit einer lageorientierten Greifzone und/oder eine asymmetrischen Kontur eingesetzt werden, sowie bei Werkstücken ohne eine spezifische Greifzone wie z. B. bei Blechen. Sie können aber selbstverständlich auch bei symmetrischen, beispielsweise rotationssymmetrischen Werkstücken zum Einsatz kommen.

Magnetische und/oder pneumatische Greifer haben den Vorteil, dass sie weniger exakt zum Werkstück positioniert werden müssen, um dieses greifen zu können. Insbesondere erlauben solche Greifer üblicherweise auch einen gewissen Versatz zwischen Werkstück und Greifer, oder erlauben das Greifen an mehreren unterschiedlichen Stellen eines Werkstückes.

Besonders bevorzugt wird dabei ein magnetischer Greifer zum Greifen des Werkstückes aus dem Behälter eingesetzt.

Weiterhin kann der erfindungsgemäße Greifer gekröpft an dem Endglied eines Greifarms angeordnet sein. Durch die gekröpfte Ausführung des Greifers ist es möglich, diesen auch im Inneren eines Behälters direkt neben einer Seitenwand des Behälters zum Greifen von Werkstücken einzusetzen. Insbesondere wird so vermieden, dass Störkanten weiter oben am Greifarm ein Heranfahren der Magnetgreifers direkt an einen Wandbereich des Behälters verhindern.

Als Objekterkennungseinrichtung zum Erfassen der Werkstücke kann erfindungsgemäß jedes beliebige System zum Einsatz kommen, welches die Identifizierung der Werkstücke und die Auswahl eines zum Greifen geeigneten Werkstückes erlaubt.

Ist die Position der Werkstücke im Behälter vorab bekannt, bspw. weil diese geordnet im Behälter angeordnet sind, so kann die Objekterkennungseinrichtung gegebenenfalls auch nur anhand solcher vorbekannter Positionsdaten erfolgen.

Das Erfassen der Werkstücke umfasst jedoch vorteilhafterweise eine Datenerhebung durch einen Messvorgang. Dann erfolgt durch Auswertung der Daten eine Identifizierung der einzelnen Werkstücke im Erfassungsbereich, aus welchen ein zum Greifen geeignetes Werkstück ausgewählt wird. Auf Grundlage der Positionsdaten dieses Werkstückes wird die Bewegung des Greifers bzw. des diesen bewegenden Greifarmes geplant. Dabei kann eine Kollisionsprüfung durchgeführt werden, so dass ein Bewegungsablauf gewählt wird, bei welchem der Greifer bzw. der Greifarm nicht mit Störkanten wie beispielsweise den anderen Werkstücken und/oder den Seitenwänden des Behälters kollidiert. Anhand der so berechneten Daten wird dann der Greifer bzw. der Greifarm angesteuert.

Als Objekterkennungseinrichtung kommen dabei insbesondere optische Sensoren zum Einsatz, wobei insbesondere Laser- und/oder Bildsensoren zum Einsatz kommen können. Die Sensoren können dabei zweidimensional, zweieinhalbdimensional und dreidimensional arbeiten. Besonders bevorzugt kommt dabei ein 3D-Laser-Scanner zum Einsatz.

Die erste Objekterkennungseinrichtung zum Erfassen der Werkstücke im Behälter ist dabei bevorzugt in ihrer Messposition oberhalb des Behälters angeordnet.

Bei der Auswahl des zu greifenden Werkstückes kann dabei insbesondere ermittelt werden, ob ein Werkstück identifiziert wurde, welches mit einer vorgegebenen ersten Relativposition zwischen Werkstück und Greifer gegriffen werden kann.

Eine solche erste Relativposition kann insbesondere eine optimale Griffposition zwischen Werkstück und Greifer darstellen, welche bei einem magnetischen Greifer beispielsweise darin besteht, dass die Magnetfläche des Greifers optimal mit dem Werkstück überlappt.

Allerdings kann bei ungeordnet aufeinanderliegenden Teilen der Fall entstehen, dass keines der im Behälter vorhandenen Werkstücke mit einer solchen ersten Relativposition gegriffen werden kann. Erfindungsgemäß kann die Steuerung in diesem Fall ein Werkstück auswählen, welches mit einer zweiten, bspw. nicht optimalen, Griffposition gegriffen wird. Beispielsweise kann bei einem magnetischen Greifer dabei ein gewisser Offset zwischen der optimalen magnetischen Greiffläche und dem Werkstück erlaubt sein. Ebenfalls kommt als alternative Greifposition beim magnetischen Greifer eine um einen Winkel zur optimalen magnetischen Greifposition verdrehte Greifposition in Betracht, bspw, mit einem Winkelversatz von 90°. Alternativ oder wenn auch dies nicht möglich ist, kann beispielsweise ein Greifen am höchsten Punkt des Werkstückes versucht werden. Insbesondere kann eine Mehrzahl von alternativen Greifpositionen vorgesehen sein, welche bei der Auswahl des zu greifenden Werkstückes herangezogen werden.

Alternativ oder zusätzlich kann vorgesehen sein, dass der Greifer erfindungsgemäß so angesteuert wird, dass er für den Fall, dass er ein Werkstück mit einer ersten zum Greifen berechneten Position nicht aufnehmen kann, das Greifen mit einer zweiten, veränderten Position wiederholt. Dies ist bei mechanischen Greifern nur dann möglich, wenn das Werkstück mehrere Greifzonen bietet. Bei magnetischen und/oder pneumatischen Greifern kann dagegen leichter auch mit einem gewissen Offset zu einer optimalen Greif-Position gegriffen werden.

Gemäß der vorliegenden Erfindung umfasst auch die Positioniervorrichtung einen Greifer zum Abnehmen der Werkstücke von der Zwischenstation.

Bei dem Greifer der Positioniervorrichtung handelt es sich um einen zweiten, bevorzugt separaten Greifer.

Als zweiter Greifer kann dabei wiederum ein beliebiger Greifer eingesetzt werden, insbesondere ein mechanischer, magnetischer und/oder pneumatischer Greifer. Bevorzugt ist der zweite Greifer dabei anders aufgebaut als der erste Greifer.

Die vorliegende Erfindung umfasst damit sämtliche Kombinationen aus erstem und zweitem Greifer, und insbesondere die Kombinationen magnetisch/mechanisch, mechanisch/mechanisch, pneumatisch/mechanisch, mechanisch/pneumatisch, pneumatisch/pneumatisch und magnetisch/pneumatisch.

Besonders vorteilhafterweise handelt es sich bei dem zweiten Greifer der Positioniervorrichtung jedoch um einen mechanischen Greifer. Ein solcher mechanischer Greifer hat eine höhere Genauigkeit beim Greifen und Positionieren des Werkstückes, erfordert jedoch auch eine genauere Zustellung ans Werkstück. Dabei kann durch die erfindungsgemäße Zwischenstation, auf welcher die Werkstücke bereits vorvereinzelt und vorpositioniert sind, ein solcher mechanischer Greifer mit einer ausreichenden Prozesssicherheit und Genauigkeit eingesetzt werden.

Der Aufbau des mechanischen Greifers hängt dabei entscheidend von den zu greifenden Werkstücken ab. Beispielsweise kann es sich bei dem mechanischen Greifer um einen Fingergreifer handeln, insbesondere um einen Mehrfingergreifer.

Weiterhin ist es denkbar, einen magnetischen Greifer mit mehreren magnetischen Greifzonen einzusetzen, welcher es dementsprechend erlaubt, genauer zu greifen. Vorteilhafterweise sind die Greifzonen dabei an das zu greifende Werkstück angepasst.

Die vorliegende Erfindung ermöglicht dabei in einer bevorzugten Variante eine hundertprozentige Entleerung der Behälter. Insbesondere wird dies durch den Einsatz der erfindungsgemäßen Zwischenstation erreicht, und/oder durch den Einsatz eines magnetischen und/oder pneumatischen Greifers zum Greifen der Werkstücke im Behälter.

Die vorliegende Erfindung stellt damit sicher, dass sämtliche in einem Behälter vorhandenen Werkstücke tatsächlich auch entnommen werden können, was bei einem direkten Anordnen der Werkstücke an einer Zielaufnahme und/oder beim Einsatz eines mechanischen Greifers zum Entnehmen der Werkstücke aus dem Behälter in vielen Fällen nicht möglich wäre.

Vorteilhafterweise kann dabei nach dem Entnehmen eines durch die Steuerung als letztes Werkstück im Behälter identifizierten Werkstückes noch einmal eine Erfassung von Werkstücken im Behälter erfolgen, um sicherzustellen, dass der Behälter auch tatsächlich komplett entleert wurde. Vorteilhafterweise erfolgt erst dann eine Ausschleusung des Behälters, wenn bei dieser Erfassung keine Werkstücke identifiziert werden konnten.

Bevorzugt umfasst die vorliegende Erfindung eine zweite Objekterkennungseinrichtung zum Erfassen der Werkstücke auf der Zwischenstation. Die auf der Zwischenstation abgelegten Werkstücke werden damit erfindungsgemäß noch einmal erfasst und können so von der Positioniervorrichtung, und insbesondere von dem Greifer der Positioniervorrichtung, mit erhöhter Genauigkeit gegriffen und/oder vereinzelt werden.

Als Objekterkennungseinrichtung zum Erfassen der Werkstücke kann dabei eine Objekterkennungseinrichtung zum Einsatz kommen, wie sie bereits oben im Hinblick auf die erste Objekterkennungseinrichtung zum Erfassen der Werkstücke im Behälter beschrieben wurde.

Auch die Auswertung der Daten, Identifizierung und Auswahl der Werkstücke, die Bahnplanung und die Ansteuerung des Greifers der Positioniervorrichtung kann in gleicher Weise erfolgen, wie dies oben im Hinblick auf die entsprechenden Schritte beim Greifern aus dem Behälter dargestellt wurde.

Weiterhin kann in der Steuerung eine Überprüfung stattfinden, ob es sich bei den Werkstücken um die für die Weiterverarbeitung gewünschten Werkstücke handelt oder um ein fälschlicherweise im Behälter angeordnetes Werkstück. Insbesondere kann dabei ein Vergleich von Werkstückdaten, welche durch Auswertung der Daten der Objekterkennungseinrichtung ermittelt wurden, mit vorgegebenen Anforderungen erfolgen.

Wird ein falsches Werkstück erkannt, so sortiert die Steuerung dieses vorteilhafterweise durch eine entsprechende Ansteuerung des Greifers aus.

Vorteilhafterweise erfolgt das Aussortieren von Werkstücken dabei auf der Zwischenstation, insbesondere durch Auswertung der Daten der zweiten Objekterkennungseinrichtung und durch Ansteuerung des zweiten Greifers und/oder über ein Ausschleusen des Transportbandes, bspw. wenn der Greifer das falsche Teil nicht greifen kann.

Weiterhin kann vorgesehen sein, dass die Erfassung der Werkstücke auf der Zwischenstation mit höherer Genauigkeit erfolgt als die Erfassung der Werkstücke im Behälter, bspw. mit einer höheren Auflösung.

Die zweite Objekterkennungseinrichtung zum Erfassen der Werkstücke auf der Zwischenstation ist dabei vorteilhafterweise in bzw. oberhalb eines Entnahmebereiches der Zwischenstation angeordnet. Insbesondere kann die zweite Objekterkennungseinrichtung so die Werkstücke erfassen, welche von der Positioniervorrichtung im Entnahmebereich der Zwischenstation gegriffen werden sollen.

Wie bereits eingangs erläutert, ist es durch den Einsatz der Zwischenstation nicht notwendig, die Werkstücke beim Ablegen auf der Zwischenstation exakt zu positionieren, da die weitere Positionierung durch die Positioniervorrichtung erfolgt. Insbesondere können die Werkstücke dabei ungeordnet auf der Zwischenstation abgelegt werden.

Insbesondere können die Werkstücke dabei ungeordnet auf der Zwischenstation angeordnet sein und durch die Positioniervorrichtung gegriffen und sodann positioniert und/oder vereinzelt werden.

Dabei kann vorgesehen sein, dass die Steuerung den ersten Greifer zum Ablegen der Werkstücke auf der Zwischenstation so ansteuert, dass die Werkstücke aus einer gewissen Höhe auf einen Ablegebereich der Zwischenstation fallen. Dieses Vorgehen hat mehrere Vorteile:
Zum einen wird so verhindert, dass der Greifer mit dem Werkstück beim Ablegen der Werkstücke mit der Zwischenstation kollidiert, da die Werkstücke beim Fallenlassen noch einen gewissen Abstand zur Zwischenstation aufweisen. Weiterhin muss die Position des Werkstücks am Greifer nicht bekannt sein. Zudem kann auf eine genaue Positionierung verzichtet werden, was die Geschwindigkeit erhöht.
Weiterhin hat dieses Vorgehen bei Werkstücken, welche miteinander verhaken können, den Vorteil, dass diese sich beim Fall auf den Ablegebereich voneinander lösen. Zudem erlaubt dieses Fallenlassen eine Trennung von mehreren, gleichzeitig aufgenommenen Werkstücken.

Das Fallenlassen der Werkstücke hat dabei besondere Vorteile, wenn ein magnetischer und/oder pneumatischer Greifer zum Entnehmen der Werkstücke aus dem Behälter eingesetzt wird. In diesem Fall ist nämlich die Position des Werkstückes am Greifer nicht notwendigerweise eindeutig definiert, so dass ein Positionieren der Werkstücke auf der Zwischenstation kaum möglich wäre. Weiterhin kann insbesondere bei magnetischen Greifern nie ausgeschlossen werden, dass mehrere Werkstücke aufgenommen werden, so dass das Fallenlassen zu einer weiteren Vereinzelung führt.

Vorteilhafterweise umfasst der Ablegebereich der Zwischenstation dabei eine schräge Ebene. Insbesondere werden die Werkstücke dabei auf diese schräge Ebene fallengelassen. Die schräge Ebene dient dabei der Vereinzelung und/oder Vororientierung der Werkstücke, und/oder zum Weitertransport der Werkstücke. Insbesondere dient die schräge Ebene dabei als Rutsche für die Werkstücke.

Bevorzugt weist der als schräge Ebene ausgestaltete Ablegebereich dabei seitliche Anschlagbereiche auf, welche die Werkstücke seitlich führen. Bevorzugt verengen die Anschlagbereiche dabei die schräge Ebene nach unten hin, so dass die Werkstücke in einem in Seitenrichtung relativ großen Bereich fallengelassen werden können, und dennoch durch die sich verengenden Anschlagbereiche zu einem in Seitenrichtung kürzeren Weitertransportbereich geführt werden.

Bevorzugt ist ein Höhensensor zum Erkennen der Entfernung eines am Greifer angeordneten Werkstückes von dem Ablegebereich in Höhenrichtung vorgesehen. Hierdurch muss die Position des Werkstückes am Greifer nicht bekannt sein, um das Werkstück aus einer vorgegebenen Höhe fallen zu lassen. Vielmehr kann diese Höhe durch den Höhensensor erkannt werden. Insbesondere dient der Höhensensor dabei zum Erkennen der Höhe des Werkstückes über der schrägen Ebene.

In einem bevorzugten Ausführungsbeispiel wird eine seitlich am Ablegebereich angeordnete Lichtschrankenanordnung als Höhensensor eingesetzt. Insbesondere kann ein Werkstück dabei fallengelassen werden, wenn es in den von der Lichtschrankenanordnung überwachten Bereich gelangt.

Vorteilhafterweise wird der erste Greifer damit so angesteuert, dass er ein aus dem Behälter entnommenes Werkstück über den Ablegebereich der Zwischenstation bewegt und dort solange absenkt, bis der Höhensensor einen vorbestimmten Abstand zwischen Werkstück und Ablegebereich erkennt. Daraufhin wird das Werkstück fallengelassen.

In einer weiteren Ausführung kann vorgesehen sein, dass der Ablegebereich wie oben beschrieben eine schräge Ebene aufweist, auf welcher die Werkstücke bis zum Entnahmebereich rutschen.

Erfindungsgemäß umfasst die Zwischenstation eine Transporteinrichtung zum Weitertransport der Werkstücke weg von einem Ablegebereich. Die Transporteinrichtung kann dabei einen Antrieb aufweisen. Insbesondere kann dabei ein Transportband eingesetzt werden.

Da die Werkstücke ungeordnet auf der Transporteinrichtung angeordnet werden können, weist die Transporteinrichtung vorteilhafterweise keine Aufnahmen für die Werkstücke auf. Insbesondere können die Werkstücke dabei ungeordnet auf einer Transportfläche angeordnet sein, beispielsweise einer durch ein Transportband gebildeten Transportfläche.

Erfindungsgemäß transportiert die Transporteinrichtung die Werkstücke von dem Ablegebereich zu einem Entnahmebereich, in welchem die Werkstücke durch einen Greifer der Positioniervorrichtung gegriffen und von der Zwischenstation abgenommen werden. Vorteilhafterweise werden die Werkstücke vor oder in diesem Entnahmebereich durch eine zweite Objekterkennungseinrichtung erfasst.

Vorteilhafterweise erfolgt dabei das Erfassen der Werkstücke und/oder das Abnehmen der Werkstücke, während sich die Werkstücke auf der Transporteinrichtung befinden. Bevorzugt wird dabei die Transporteinrichtung angehalten, um die Werkstücke zu erfassen und/oder abzunehmen. Ist ein weiteres Werkstück abgenommen, wird die Transporteinrichtung weiterbewegt, bis das nächste Werkstück im Erfassungs- und/oder Entnahmebereich bewegt wurde.

Vorteilhafterweise werden dabei Daten der zweiten Objekterkennungseinrichtung und/oder eine Lichtschranke zum Ansteuern des Transportbandes eingesetzt.

Vorteilhafterweise rutschen erfindungsgemäß die auf die schräge Ebene fallenden Werkstücke zu einem ersten Ende der Transporteinrichtung, von wo aus sie auf der Transporteinrichtung zu einem Entnahmebereich transportiert werden.

Erfindungsgemäß kann die Transporteinrichtung mit einer mechanischen Umorientierungs-Einrichtung ausgestattet sein, welche die Position von Werkstücken beim Transport von dem Ablegebereich zum Entnahmebereich zumindest zum Teil verändert und/oder eine grobe Vorpositionierung vornimmt.

Eine solche Umorientierungs-Einrichtung ist immer dann von Vorteil, wenn die Werkstücke in gewissen Positionen nicht von der Positioniervorrichtung gegriffen werden können. Dies kann beispielsweise der Fall sein, wenn die Werkstücke auf ihrer Schmalseite auf der Transporteinrichtung zu liegen kommen, aber nur dann gegriffen werden können, wenn sie auf ihrer Breitseite liegen. In diesem Fall kann die Umorientierungs-Einrichtung so ausgeführt sein, dass sie auf ihrer Schmalseite liegende Werkstücke umwirft.

Als Umorientierungs-Einrichtung kann insbesondere eine Klappe und/oder ein Balken vorgesehen sein, welcher vorteilhafterweise quer zur Transportrichtung über die Transporteinrichtung verläuft. Insbesondere ist die Klappe bzw. der Balken dabei in einer vorgegebenen Höhe über dem Transportband angeordnet.

Insbesondere kann die Zwischenablage damit einen Ablegebereich und einen Entnahmebereich aufweisen, sowie eine Transporteinrichtung, welche die Werkstücke vom Ablegebereich zum Entnahmebereich transportiert. Weiterhin kann eine Objekterfassungseinrichtung über dem Entnahmebereich angeordnet sein. Der Transport von der Be- zur Entladeseite durch die Transporteinrichtung kann dabei auf vielfältige Art und Weise implementiert werden.

Beispielsweise ist es denkbar, eine Transporteinrichtung ohne Antrieb einzusetzen, bei welcher die Werkstücke alleine aufgrund der Schwerkraft vom Ablegebereich zum Entnahmebereich gelangen. Insbesondere kann dabei eine schräge Ebene eingesetzt werden, auf welcher die Werkstücke herunter rutschen.

Bevorzugt weist die Transporteinrichtung jedoch wie oben beschrieben einen Antrieb auf. Hierbei sind unterschiedliche Ausgestaltungen denkbar:
So kann der Antrieb linear erfolgen, beispielsweise über ein Transportband, oder z. B. einen Schieber, ein Shuttle oder einen Schlitten. Als Antrieb kann dabei ein Motor eingesetzt werden, oder ein Linearantrieb wie z.B. ein Pneumatikzylinder.

Weiterhin ist eine kreisförmige Ausführung der Transporteinrichtung denkbar. So kann beispielsweise ein Drehtisch vorgesehen sein, auf welchem die Werkstücke an einer Seite abgelegt werden und durch Drehung des Tisches zur anderen Seite transportiert werden. Dabei kann z. B. ein runder, segmentierter Tisch und / oder ein Kreisspeicher eingesetzt werden. Ebenfalls ist denkbar, einen Loop bzw. ein kreisförmiges Transportband einzusetzen.

Weiterhin kann der Transport auch in vertikaler Richtung erfolgen, insbesondere zwischen mehreren übereinander liegenden Ebenen. Dabei kann der Transport von oben nach unten und / oder von unten nach oben von statten gehen.

Weiterhin ist es denkbar, als Transporteinrichtung eine Kombination aus den oben genannten Möglichkeiten einzusetzen.

Bevorzugt wird das Werkstück während des Transportes in seiner Position verändert, um die Entnahmegenauigkeit zu erhöhen (ungenau ablegen, genau entnehmen). Das kann beispielsweise durch die oben beschriebene Umorientierungs-Einrichtung erfolgen, insbesondere durch Endanschläge, Führungsleisten mit Anfasung, Federmechanismen etc. Weiterhin kann die Zwischenstation auch als Umgreifplatz verwendet werden.

In einer möglichen Ausführungsform kann dabei die Transporteinrichtung als eine Transportfläche ausgeführt sein, welche über einen Linearantrieb wie z.B. einen Transportzylinder vom Ablegebereich zum Entnahmebereich verfahren wird und wieder zurück. Besonders bevorzugt sind dabei zwei solcher Transportflächen vorgesehen, so dass immer eine leere Transportfläche im Ablegebereich zum Beladen zur Verfügung steht und eine befüllte Transportfläche im Entnahmebereich zum Entladen. Hierdurch kann das System ohne Wartezeiten arbeiten. Insbesondere können die Linearantriebe der beiden Transportflächen dabei parallel zueinander angeordnet sein.

Erfindungsgemäß kann die Zwischenstation mit einem Belegungssensor ausgestattet sein, um die Belegung des Ablegebereiches und/oder der Transporteinrichtung und/oder des Entnahmebereiches zu erfassen. Als Belegungssensor kann dabei insbesondere eine Lichtschranke eingesetzt werden, wobei die Lichtschranke vorteilhafterweise seitlich am Ablegebereich und/oder an der Transporteinrichtung und/oder am Entnahmebereich angeordnet ist. Insbesondere ist die Lichtschranke dabei in einer gewissen Höhe angeordnet und erkennt, ob mehrere Werkstücke übereinander auf der Transporteinrichtung gestapelt sind.

Vorteilhafterweise ist die Steuerung dabei so ausgeführt, dass das Ablegen von Werkstücken auf die Zwischenstation gestoppt wird, wenn eine zu hohe Belegung erkannt wird. Insbesondere wird der Belegungssensor dabei dazu eingesetzt, die Belegung des Teiles der Transporteinrichtung zu überwachen, in welche die Werkstücke von dem Ablegebereich aus rutschen. Ist dieser Bereich zu stark beladen, wird das Ablegen von Werkstücken auf die Zwischenstation gestoppt, bis durch das Abnehmen von Werkstücken durch die Positioniervorrichtung und die Weiterbewegung der Transporteinrichtung in diesem Bereich wieder genügend Platz ist.

Bevorzugt können der erste und/oder der zweite Greifer über automatisch angesteuerte Stellachsen eines Greifarmes bewegt werden.

In einer ersten Ausführungsvariante können dabei der erste und der zweite Greifer an einem gemeinsamen Greifarm angeordnet sein und über diesen bewegt werden.

Bevorzugt sind der erste und der zweite Greifer jedoch an separaten Greifarmen angeordnet und können so unabhängig voneinander bewegt werden.

Bei dem Greifarm bzw. den Greifarmen kann es sich insbesondere um den Roboterarm eines sechsachsigen Industrieroboters handeln. Alternativ kann jedoch auch ein an einem Flächen- oder Linearportal angeordneter Greiferarm eingesetzt werden, welcher ggf. mindestens eine weitere Drehachse aufweist.

Weiterhin könnte auch der Behälter mit den Werkstücken bewegt werden, um zumindest einen Teil der Relativbewegung zwischen Werkstück und erstem Greifer zu erzeugen.

Die vorliegende Erfindung umfasst weiterhin ein Verfahren zum automatisierten Entnehmen von in einem Behälter angeordneten Werkstücken unter Verwendung einer Vorrichtung, wie sie oben beschrieben wurde. Das Verfahren kann dabei die Schritte
- Erfassen der Werkstücke,
- Greifen mindestens eines Werkstückes mit einem ersten Greifer und
- Entnehmen des Werkstückes aus dem Behälter
umfassen. Erfindungsgemäß ist vorgesehen, dass die Werkstücke nach dem Entnehmen aus dem Behälter auf eine Zwischenstation abgelegt werden, von welcher aus die Werkstücke durch mindestens einen weiteren Positionierschritt genauer positioniert und/oder vereinzelt werden.

Das erfindungsgemäße Verfahren erfolgt dabei bevorzugt so, wie dies bereits oben im Hinblick auf die Vorrichtung beschrieben wurde.

Die vorliegende Erfindung umfasst weiterhin ein Computerprogramm zur Durchführung eines erfindungsgemäßen Verfahrens. Insbesondere umfasst das Computerprogramm Befehle, welche ein erfindungsgemäßes Verfahren auf einer Vorrichtung zum automatisierten Entnehmen von ungeordnet in einem Behälter angeordneten Werkstücken implementieren. Insbesondere dient das erfindungsgemäße Computerprogramm dabei der Implementierung einer Steuerung für eine Vorrichtung, wie sie oben beschrieben wurde.

Vorteilhafterweise erfolgen alle Schritte bei der Handhabung der Werkstücke durch das erfindungsgemäße Verfahren und/oder die erfindungsgemäße Vorrichtung voll automatisiert und ohne dass ein Benutzereingriff notwendig wäre.

Der Gegenstand der vorliegenden Erfindung wird nun anhand von Ausführungsbeispielen sowie Zeichnungen näher beschrieben.

Dabei zeigen:
- Figur 1: Ein Ablaufschema einer Erfassung von Werkstücken und einer entsprechenden Ansteuerung eines Greifers,
- Figur 2: Ein erstes Ausführungsbeispiel einer Vorrichtung, welche zum Bewegen eines Greifers eingesetzt werden kann,
- Figur 3: Ein zweites Ausführungsbeispiel einer Vorrichtung, welche zum Bewegen eines Greifers eingesetzt werden kann,
- Figur 4: Ein erstes Ausführungsbeispiel einer erfindungsgemäßen Vorrichtung zum automatisierten Entnehmen von ungeordnet in einem Behälter angeordneten Werkstücken,
- Figur 4a: Eine alternative Ausführung einer Transportstrecke, wie sie bei dem in Fig. 4 gezeigten Ausführungsbeispiel auf der Zwischenstation eingesetzt werden kann,
- Figur 5: Einen ersten Greifer des in Figur 4 gezeigten Ausführungsbeispiels,
- Figur 6: Eine Detailansicht des in Figur 5 gezeigten Greifers,
- Figur 7: Einen zweiten Greifer des in Figur 4 gezeigten Ausführungsbeispiels,
- Figur 8: Ein Ausführungsbeispiel einer verfahrbaren Objekterkennungseinrichtung, wie sie in dem in Figur 4 gezeigten Ausführungsbeispiel einsetzbar ist,
- Figur 9: Die in Figur 8 gezeigte verfahrbare Objekterkennungseinrichtung in einer Seitenansicht,
- Figur 10: Ein zweites Ausführungsbeispiel einer erfindungsgemäßen Vorrichtung zum automatisierten Entnehmen von ungeordnet in einem Behälter angeordneten Werkstücken, bei welchem ein Ausführungsbeispiel einer erfindungsgemäßen Zwischenstation mit umlaufender Transportstrecke eingesetzt wird,
- Figur 11: Ein drittes Ausführungsbeispiel einer Vorrichtung zum automatisierten Entnehmen von ungeordnet in einem Behälter angeordneten Werkstücken, welches auf den in Figur 4 gezeigten Ausführungsbeispiel beruht und weiterhin ein Ausführungsbeispiel einer zweiten Zwischenstation umfasst, auf welcher Werkstücke in mindestens einer Aufnahme abgelegt werden können,
- Figur 12: Das Ausführungsbeispiel einer zweiten Zwischenstation, wie es bei der Vorrichtung gemäß Figur 11 eingesetzt wird, in einer Detailansicht,
- Figur 13: Ein viertes Ausführungsbeispiel einer erfindungsgemäßen Vorrichtung zum automatisierten Entnehmen von ungeordnet in einem Behälter angeordneten Werkstücken, welches auf den in Figur 4 gezeigten Ausführungsbeispiel beruht und ein zweites Ausführungsbeispiel einer zweiten Zwischenstation umfasst, auf welcher Werkstücke in einer Aufnahme abgelegt werden können,
- Figur 14: Ein fünftes Ausführungsbeispiel einer erfindungsgemäßen Vorrichtung zum automatisierten Entnehmen von ungeordnet in einem Behälter angeordneten Werkstücken, welches auf der in Figur 4 gezeigten Ausführungsform beruht und weiterhin eine Messeinrichtung umfasst, mittels welcher eine Messung der Greifgenauigkeit möglich ist,
- Figur 15: Eine Detaildarstellung eines Ausführungsbeispiels einer Messeinrichtung, in welcher die Greifgenauigkeit gemessen werden kann,
- Figur 16: Ein Ausführungsbeispiel eines Greifers mit einem Stabilisatorelement,
- Figur 17: Eine Schnittansicht durch das in Figur 16 dargestellte Ausführungsbeispiel eines Greifers,
- Figur 18: Ein erstes Ausführungsbeispiel einer Ausgleichseinheit,
- Figur 19: Eine Schnittansicht durch die in Figur 18 gezeigte Ausgleichseinheit,
- Figur 20: Ein zweites Ausführungsbeispiel einer Ausgleichseinheit,
- Figur 21: Eine Frontalansicht der und eine Schnittansicht durch die in Figur 20 gezeigte Ausgleichseinheit,
- Figur 22: Eine Seitenansicht der in Figur 20 gezeigten Ausgleichseinheit,
- Figur 23: Ein Ablaufschema eines Verfahrens zur Erfassung von Werkstücken gemäß der vorliegenden Erfindung,
- Figur 24: Ein Ablaufschema eines Verfahrens zum erfindungsgemäßen Greifen von Werkstücken aus einem Behälter, und
- Figur 25: Ein Ablaufschema eines Verfahrens zum erfindungsgemäßen Greifen von Werkstücken von einer Zwischenstation.

Im folgenden sollen Ausführungsbeispiele von Vorrichtungen zum automatisierten Handhaben von Werkstücken dargestellt werden, bei welchen die vorliegende Erfindung zum Einsatz kommt.

Die einzelnen Ausführungsbeispiele dienen dabei insbesondere der vollautomatischen Vereinzelung und/oder Positionierung von Werkstücken. Als Werkstücke können dabei beliebige Elemente gehandhabt werden, insbesondere neben Werkstücken mit einer oder mehreren Symmetrieebenen oder Symmetrieachsen auch unsymmetrische Werkstücke. Weiterhin können dabei Werkstücke gehandhabt werden, welche nur einen Greifpunkt aufweisen, oder Werkstücke mit mehreren Greifpunkten. Insbesondere können die erfindungsgemäßen Vorrichtungen dabei zum Handhaben von metallischen Werkstücken eingesetzt werden. Selbstverständlich können die Werkstücke jedoch aus beliebigen Materialien bestehen, und insbesondere auch aus Kunststoff. Weiterhin können die Werkstücke auch aus mehreren Materialien bestehen, bspw. aus einer Kombination von Kunststoff- und Metallteilen.

Teilweise wird dabei ein Greifer zum Greifen des Werkstücks mit einer Objekterkennungseinrichtung zum Erfassen der Werkstücke kombiniert, so dass der Greifer anhand der von der Objekterkennungseinrichtung ermittelten Daten angesteuert werden kann. Insbesondere dienen solche Vorrichtungen dem automatisierten Handhaben von ungeordneten Werkstücken.

Die Objekterkennungseinrichtung zum Erfassen der Werkstücke kann dabei einen beliebigen Sensor umfassen, dessen Daten eine Objekterkennung der Werkstücke erlauben. Insbesondere kann dabei ein Laserscanner eingesetzt werden. Alternativ oder zusätzlich kann die Objekterkennungseinrichtung ein oder mehrere Kameras umfassen. Bevorzugt erlaubt die Objekterkennungseinrichtung dabei eine 3D-Objekterkennung. Alternativ ist jedoch eine 2D- oder 2,5D-Objekterkennung denkbar.

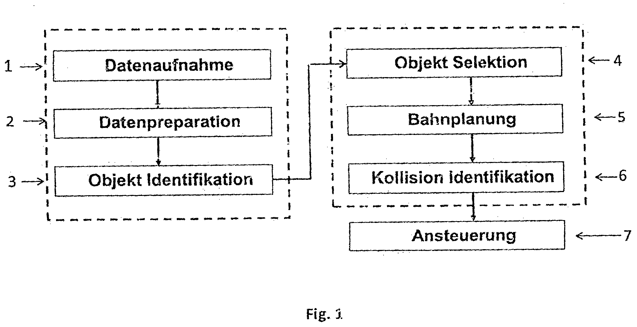

Figur 1 zeigt den typischen Ablauf bei der Erfassung von ungeordneten Werkstücken und der entsprechenden Ansteuerung eines Greifers. In Schritt 1 (Datenaufnahme) wird eine Messung durch die Objekterkennungseinrichtung durchgeführt, durch welche Daten erhalten werden. Diese Daten werden in einem Schritt 2 (Datenpreparation) aufgearbeitet, um in einem Schritt 3 (Objekt Identifikation) eine Identifikation der einzelnen Werkstücke zu ermöglichen. Ggf. kann die Objekterkennungseinrichtung jedoch auch anhand von vorbekannten Positionsdaten der Werkstücke arbeiten.

In Schritt 4 (Objekt Selektion) wird aus den identifizierten Werkstücken ein Werkstück ausgewählt, welches durch den Greifer gegriffen werden kann. Anhand der Positionsdaten des ausgewählten Werkstücks wird in Schritt 5 (Bahnplanung) die Bahn für den Greifer bzw. den Greifer bewegenden Greifarm berechnet. In Schritt 6 (Kollision Identifikation) wird diese Bahn dann auf mögliche Kollisionen mit Störkanten überprüft, um Kollisionen zu verhindern. Wird eine kollisionsfreie Bahn gefunden, wird diese in Schritt 7 (Ansteuerung) zur Ansteuerung des Greifers, d. h. zum Heranfahren des Greifers in eine Greifposition an das ausgewählte Werkstück, eingesetzt.

Ein solches Verfahren kann dabei immer dann zum Einsatz kommen, wenn gemäß der vorliegenden Erfindung eine Erfassung der Werkstücke und entsprechende Ansteuerung eines Greifers erfolgt.

Insbesondere können die erfindungsgemäßen Vorrichtungen und Verfahren dabei zum Handhaben von ungeordneten Werkstücken dienen, da die Position der Werkstücke durch eine geeignete Objekterkennungseinrichtung ermittelt werden kann und daher nicht vorab bekannt sein muss. Selbstverständlich kann die vorliegende Erfindung jedoch auch dann eingesetzt werden, wenn die Werkstücke bereits mit einer gewissen Ordnung angeordnet sind.

Zum Bewegen des Greifers können beliebige Vorrichtungen mit mehreren Bewegungsachsen eingesetzt werden, über deren Ansteuerung der Greifer auf einer definierten Bahn bewegt und an das zu greifende Werkstück herangefahren werden kann.

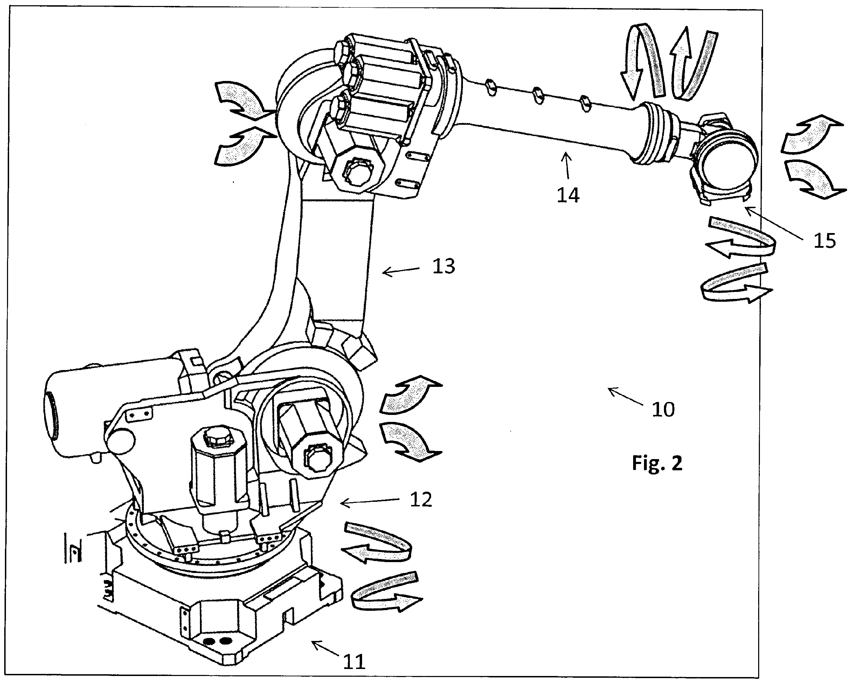

In Figur 2 ist ein erstes Ausführungsbeispiel einer solchen Vorrichtung zum Bewegen eines Greifers dargestellt, wobei es sich um einen Multiachsenroboter 10 handelt. Im Ausführungsbeispiel handelt es sich dabei um einen Sechsachsenroboter. Dieser umfasst eine Basis 11, auf welcher ein Podest 12 um eine vertikale Drehachse drehbar angeordnet ist. Am Podest 12 ist ein Schwenkarm um eine horizontale Schwenkachse schwenkbar angeordnet. Am Schwenkarm 13 ist ein Dreharm 14 um eine horizontale Schwenkachse angeordnet. Der Dreharm 14 weist weiterhin eine Rotationsachse auf, welche eine Drehung um eine parallel zum Dreharm 14 angeordnete Drehachse erlaubt. Am Dreharm 14 ist ein Greifarm 15 um eine senkrecht zur Drehachse des Dreharms 14 angeordnete Schwenkachse angeordnet. Der Greifarm weist eine Drehachse auf, welche senkrecht auf der Schwenkachse steht. Am Greifarm kann erfindungsgemäß ein Greifer angeordnet werden, welcher so über die Ansteuerung der Bewegungsachsen des Roboters im Raum bewegt und verschwenkt werden kann.

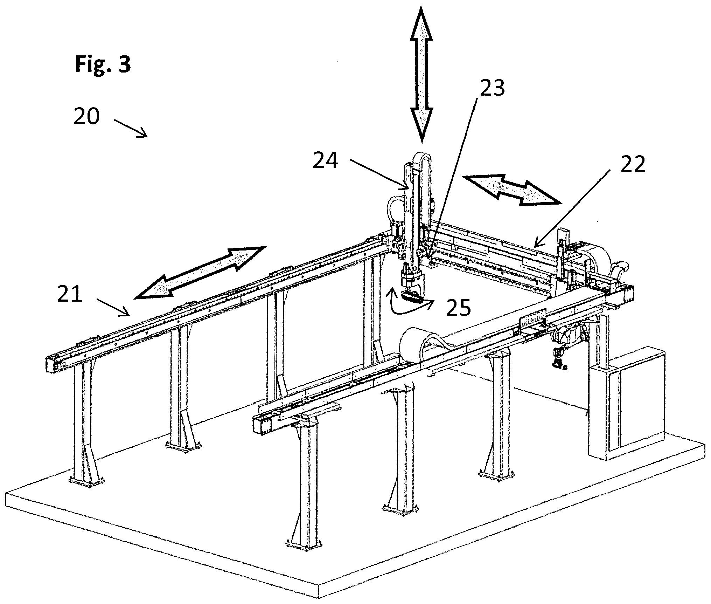

In Figur 3 ist eine alternative Ausführungsform für eine Vorrichtung zum Bewegen eines Greifers dargestellt, welche in allen Ausführungsbeispielen der vorliegenden Erfindung an Stelle eines Roboters zum Einsatz kommen kann. Dabei handelt es sich um ein Flächenportal, welches drei lineare Bewegungsachsen aufweist und zusätzlich mit einer weiteren Drehachse ausgestattet ist. Dabei sind Portalschienen 21 vorgesehen, an welchen ein Portalbalken 22 linear verfahrbar angeordnet ist. Am Portalbalken 22 ist ein Schlitten 23 ebenfalls linear verfahrbar angeordnet. Am Schlitten 23 ist ein Arm in vertikaler Richtung verfahrbar angeordnet. Dieser Arm ist zusätzlich mit einer Drehachse 25 ausgestattet. Der Arm kann dabei an seinem unteren Ende einen Greifer gemäß der vorliegenden Erfindung aufweisen.

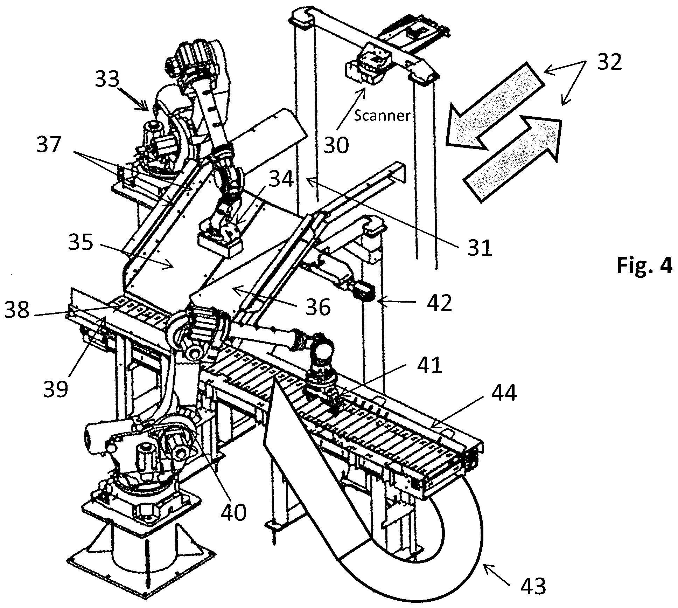

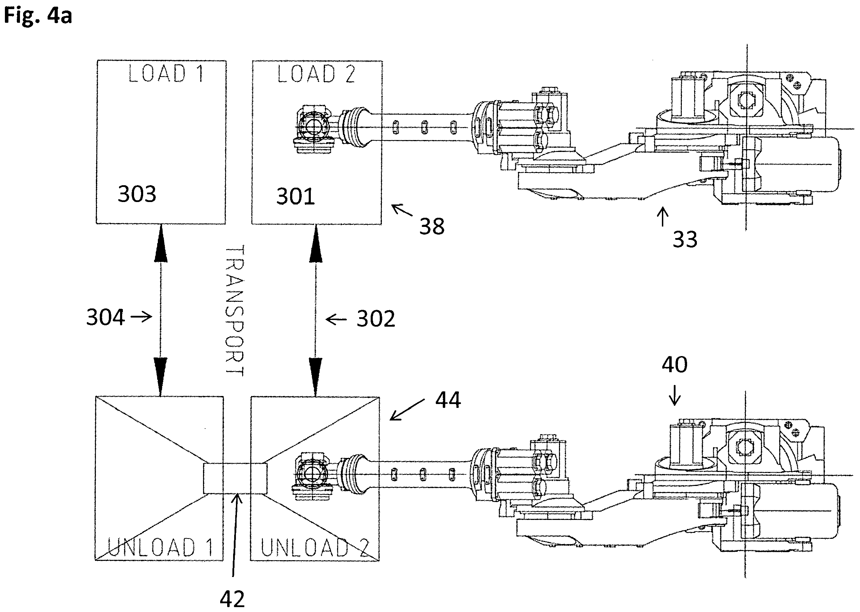

In Figur 4 ist ein erstes Ausführungsbeispiel einer erfindungsgemäßen Vorrichtung zum automatisierten Entnehmen von Werkstücken dargestellt, welches eine Objekterkennungseinrichtung 30 zum Erfassen der Werkstücke mit einem ersten Greifer 34 zum Greifen der Werkstücke kombiniert, um die ungeordnet in einem Behälter angeordneten Werkstücke mit dem ersten Greifer 34 aus dem Behälter zu entnehmen. Dabei werden die Werkstücke vom ersten Greifer 34 nicht direkt an einer Zielaufnahme angeordnet, sondern ungeordnet auf einer Zwischenstation abgelegt, von wo aus sie über einen zweiten Greifer 41 genauer positioniert werden.

Das Ausführungsbeispiel weist dabei eine Aufnahme 31 für einen nicht dargestellten Behälter mit ungeordnet in diesem angeordneten Werkstücken auf. Weiterhin kann eine Ein- und Ausschleusevorrichtung 32 für solche Behälter vorgesehen sein. Oberhalb des nicht dargestellten Behälters ist die Objekterkennungseinrichtung 30 zum Erfassen der Werkstücke im Behälter vorgesehen. Deren Daten werden wie eingangs beschrieben so ausgewertet, dass über den ersten Greifer 34 die Werkstücke im Behälter gegriffen und aus diesem entnommen werden können. Der erste Greifer 34 wird dabei im Ausführungsbeispiel über einen Roboter 33 bewegt. Alternativ könnte hier auch ein Flächenportal zum Einsatz kommen.

Als erster Greifer 34 kommt im Ausführungsbeispiel ein Magnetgreifer zum Einsatz, da ein solcher Magnetgreifer weniger hohe Anforderungen an die Zustellgenauigkeit des Greifers zum Werkstück stellt und daher besser dazu geeignet ist, Behälter mit chaotisch in diesem angeordneten Werkstücken, welche zudem übereinander in beliebigen Positionen geschichtet sein können, tatsächlich zu 100 % zu entleeren, wie dies gemäß dem Ausführungsbeispiel der vorliegenden Erfindung möglich ist.

Insbesondere ist es bei einem Magnetgreifer möglich, Werkstücke auch mit einer nichtoptimalen Greifposition zu ergreifen. Insbesondere kann dabei zwischen der Greiffläche des Magnetgreifer und einer Hauptfläche des Werkstückes ein gewisser Versatz bestehen. Zudem ist gegebenenfalls auch dann noch ein Greifen möglich, wenn der Magnetgreifer lediglich an dem höchsten Punkt eines Werkstückes angreift. Kann die Steuerung daher anhand der Daten der Objekterkennungseinrichtung kein Werkstück identifizieren, welches optimal gegriffen werden kann, bei welchem also eine optimale Überlagerung der Greiffläche und einer Hauptfläche des Werkstückes vorliegt, so kann alternativ auf ein Greifen mit Versatz oder ein Greifen an einem höchsten Punkt zurückgegriffen werden. Ebenso kann auf ein solches Greifen zurückgegriffen werden, wenn eine andere Greifstrategie nicht zum Aufnehmen eines Teiles geführt hat.

Alternativ zu dem magnetischen Greifer 34 könnte auch ein pneumatischer Greifer eingesetzt werden. Ebenso ist es denkbar, bei dem in Figur 4 gezeigten Ausführungsbeispiel den magnetischen Greifer 34 durch einen mechanischen Greifer zu ersetzen, wenn die Werkstücke so geformt sind, dass sie durch einen mechanischen Greifer sicher auch im Behälter gegriffen werden können.

Weiterhin kann die erste Objekterkennungseinrichtung 30 eingesetzt werden, um fälschlicherweise in den Behälter gelangte Werkstücke zu erkennen. Wird dabei ein Werkstück erfasst, welches nicht die geforderten Werkstückkriterien erfüllt und daher nicht an einer Zielaufnahme positioniert werden soll, so kann dieses ausgesondert werden, bspw. indem das Werkstück gegriffen und in einen entsprechenden Behälter abgelegt wird.

Gemäß dem Ausführungsbeispiel werden die Werkstücke durch den ersten Greifer nicht an einer Zielaufnahme angeordnet, sondern auf einer Zwischenstation abgelegt, von wo aus sie durch den zweiten Greifer 41 nochmals aufgenommen und dann genauer positioniert werden. Das Ablegen der Werkstücke auf der Zwischenstation kann dabei ungeordnet erfolgen. Insbesondere können die Werkstücke dabei vom Greifer 34 aus einer vorgegebenen Höhe auf einen Ablegebereich 35 der Zwischenstation fallen gelassen werden. Der Ablegebereich 35 ist dabei als eine schiefe Ebene ausgeführt, von welcher die Werkstücke zu einer Weitertransportzone rutschen.

Der Ablegebereich 35 kann ein oder mehrere Höhensensoren aufweisen, welche die Höhe eines am Greifer 34 angeordneten Werkstücks über dem Ablegebereich bestimmen. Insbesondere kann dabei eine Lichtschrankenanordnung 37 vorgesehen sein, welche seitlich der schrägen Ebene 35 angeordnet ist. Gelangt dabei ein am Greifer 34 angeordnetes Werkstück in den Bereich der Lichtschrankenanordnung, so bedeutet dies, dass das Werkstück in einer bestimmten Höhe über der schrägen Ebene 35 angeordnet ist. Daraufhin lässt der Greifer 34 das Werkstück fallen. Diese Vorgehensweise hat den Vorteil, dass die Lage des Werkstückes am Greifer 34 nicht genau bekannt sein muss. Dennoch werden Kollisionen des Greifers mit dem Ablegebereich verhindert. Insbesondere kann dabei vorgesehen sein, dass der Greifer 34 nach dem Aufnehmen eines Werkstückes aus dem Behälter das Werkstück zunächst in horizontaler Richtung in eine Position über den Ablegebereich 35 bewegt, und dann soweit absenkt, bis der Höhensensor anspricht.

Die Zwischenstation weist weiterhin ein Transportband 38 auf, welches die Werkstücke von dem Ablegebereich 35 weiter zu einem Entnahmebereich 44 transportiert.

Die Werkstücke rutschen dabei von der schrägen Ebene auf das Transportband 38, wobei die schräge Ebene 35 durch seitliche Anschlagbereiche 36 begrenzt sein kann, welche die schräge Ebene nach unten hin verengen, so dass die Werkstücke zu einem definierten Weitertransportbereich des Transportbandes gelenkt werden.

Vorteilhafterweise ist dieser Weitertransportbereich mit einem Belegungssensor 39 ausgestattet. Insbesondere kann es sich hierbei um eine Lichtschrankenanordnung handeln, welche die Höhe der auf dem Transportband abgelegten Werkstücke ermittelt. Stapeln sich dabei mehrere Werkstücke übereinander, spricht der Belegungssensor an. In diesem Fall wird die weitere Beladung der Zwischenstation durch den ersten Greifer 34 gestoppt, bis der Belegungssensor wieder einen ausreichend freien Weitertransportbereich signalisiert.

Die Werkstücke werden auf dem Transportband 38 in den Entnahmebereich 44 transportiert und dort von dem zweiten Greifer 41 gegriffen, um von dort aus genauer positioniert oder vereinzelt zu werden. Dabei ist eine zweite Objekterkennungseinrichtung 42 vorgesehen, welche die Werkstücke im Entnahmebereich erfasst, wobei der zweite Greifer 41 anhand der Daten der zweiten Objekterkennungseinrichtung angesteuert wird. Zum Bewegen des zweiten Greifers 41 ist wiederum ein Roboter 40 vorgesehen. Alternativ könnte auch hier auf ein Flächenportal zurückgegriffen werden.

Die zweite Objekterkennungseinrichtung 42 ist zum Ergreifen der Werkstücke notwendig, da diese ungeordnet auf der Zwischenstation bzw. dem Transportband liegen. Die Greifsituation auf der Zwischenstation ist jedoch erheblich einfacher als beim Behälter, da die Werkstücke zumindest in Höhenrichtung alle auf der gleichen Ebene, d. h. auf dem Transportband angeordnet sind. Zudem sind die Werkstücke bereits vorvereinzelt und lassen sich so leichter greifen. Zudem weisen die Werkstücke einen definierten Abstand zu der Objekterkennungseinrichtung 42 auf, so dass diese genauer arbeitet.

Weiterhin kann die zweite Objekterkennungseinrichtung 42 eingesetzt werden, um fälschlicherweise auf die Zwischenstation gelangte Werkstücke zu erkennen. Wird dabei auf der Zwischenstation ein Werkstück erfasst, welches nicht die geforderten Werkstückkriterien erfüllt und daher nicht an einer Zielaufnahme positioniert werden soll, so kann dieses ausgesondert werden, bspw. indem das Werkstück gegriffen und in einen entsprechenden Behälter abgelegt oder indem es nicht gegriffen und über das Transportband weiter in einen Behälter transportiert wird.

Dabei kann vorgesehen sein, dass die zweite Objekterkennungseinrichtung eine genauere Erfassung der Werkstücke ermöglicht als die erste Objekterkennungseinrichtung, so dass falsche Werkstücke zuverlässig auf der Zwischenstation erkannt werden.

Insbesondere kann daher als zweiter Greifer ein mechanischer Greifer 41 eingesetzt werden, welcher zwar höhere Anforderungen an das Zustellen des Greifers an das Werkstück stellt, jedoch auch ein erheblich exakteres Greifen und Positionieren der Werkstücke ermöglicht. Im Ausführungsbeispiel handelt es sich bei dem mechanischen Greifer dabei um einen Fingergreifer, insbesondere um einen Zweifingergreifer wie er später noch dargestellt werden soll.

Die Steuerung des Transportbandes steht dabei mit der Objekterkennungseinrichtung 42 und der Steuerung des Greifers 41 in Verbindung. Dabei stoppt das Transportband jeweils, wenn eine Erfassung der Werkstücke und das darauf folgende Greifen eines Werkstücks durch den Greifer 41 erfolgt. Liegen dagegen keine Werkstücke mehr im Entnahmebereich 44, wird das Transportband weiterbewegt, bis sich wieder Werkstücke im Entnahmebereich 44 befinden. Hierfür kann neben den Daten der Objekterkennungseinrichtung gegebenenfalls auch eine seitlich am Transportband im Entnahmebereich angeordnete Lichtschranke eingesetzt werden.

Die Seitenwände des Transportbandes 38 können abgeschrägt sein, wie dies in Figur 4 zu erkennen ist. Hierdurch wird verhindert, dass Werkstücke in ungünstigen Positionen, welche kein Greifen erlauben, direkt an der Seitenwand stehen bleiben.

Weiterhin kann vorgesehen sein, dass quer über das Transportband 38 eine Umorientierungs-Vorrichtung vorgesehen ist, welche ungünstig angeordnete Werkstücke umwirft und so in eine bessere Position zum Greifen durch den zweiten Greifer 41 bringt. Beispielsweise kann hierfür eine nicht dargestellte Klappe oder ein Anschlagbalken, welche über dem Transportband 38 angeordnet sind, vorgesehen sein. Insbesondere kann eine solche Umorientierungs-Vorrichtung zwischen dem Weitertransportbereich 38 und dem Entnahmebereich 44 des Transportbandes angeordnet sein.

Dabei kann vorgesehen sein, dass Werkstücke, welche durch den Greifer 41 überhaupt nicht gegriffen werden können, in einen am Ende der Transportstrecke 38 angeordneten Auffangbehälter fallen. Alternativ kann eine umlaufende Transportstrecke 43 vorgesehen sein, wie diese später noch detaillierter beschrieben wird.

Alternativ zu dem Transportband, welches in Fig. 4 als Transporteinrichtung eingesetzt wird, stehen noch eine Vielzahl von anderen Alternativen für die Ausführung der Transporteinrichtung zur Verfügung. Grundlegende Idee der Zwischenstation ist dabei die Ausführung mit einer Be- und Entladeseite, einer Transporteinrichtung zwischen den beiden Seiten und einer weiteren Objekterfassungseinrichtung über der Entnahmeseite. Der Transport von einer Seite zur anderen Seite kann beispielsweise folgendermaßen stattfinden:
Angetriebene Transporteinrichtung:
   - linear arbeitende Transporteinrichtung:
      Schieber, Shuttle, Schlitten, insbesondere angetrieben durch Linearantriebe wie beispielsweise einen Pneumatikzylinder
      Transportband
   - kreisförmig
      runder, segmentierter Tisch, Kreisspeicher
      Loop bzw. kreisförmiges Band
   - mehrere übereinander liegende Ebenen
      von unten nach oben
      von oben nach unten
Nicht angetriebene Transporteinrichtungen:
   - Schräge Ebene, auf welcher die Werkstücke herunterrutschen

Kombination aus den oben genannten angetriebenen und / oder nicht angetriebenen Transporteinrichtungen
Bevorzugt wird dabei während des Transportes das Werkstück in seiner Position verändert, um die Entnahmegenauigkeit zu erhöhen (ungenau ablegen, genau entnehmen). Das kann durch Endanschläge, Führungsleisten mit Anfasung, Federmechanismen etc. erreicht werden. Weiterhin kann die Zwischenstation auch als Umgreifplatz verwendet werden.

In Fig. 4a ist dabei eine alternative Ausgestaltung der Transporteinrichtung auf der Zwischenstation dargestellt, wie sie bei dem in Fig. 4 gezeigten Ausführungsbeispiel zum Einsatz kommen kann. Im oberen Bereich ist der erste Greifer 33 dargestellt, welcher die Werkstücke aus dem Behälter nimmt und im Ablagebereich 38 auf der Zwischenstation ablegt. Im unteren Bereich ist der zweite Greifer 40 dargestellt, welcher die Werkstücke im Entnahmebereich 44 entnimmt. Weiterhin ist die zweite Objekterfassungseinrichtung 42 dargestellt, welche im Bereich des Entnahmebereiches 44 angeordnet ist.

Als Transporteinrichtung ist dabei eine erste Transportplatte 301 vorgesehen, welcher über einen Linearantrieb 302 wie beispielsweise einen Pneumatikzylinder vom Ablegebereich 38 zum Entnahmebereich 44 verfahren werden kann und zurück. Zusätzlich ist eine zweite Transportplatte 303 vorgesehen, welche über den Linearantrieb 304 ebenfalls vom Ablegebereich 38 zum Entnahmebereich 44 und zurück verfahren werden kann. Die beiden Transportplatten und Linearantriebe können dabei identisch ausgeführt werden. Weiterhin können die beiden Transporteinrichtungen parallel zueinander angeordnet sein. Durch die Ausführung mit zwei Transportplatten steht immer eine leere Transportplatte zum Beladen bzw. eine befüllte Transportplatte zum Entladen zur Verfügung, so dass das System ohne Wartezeiten arbeiten kann.

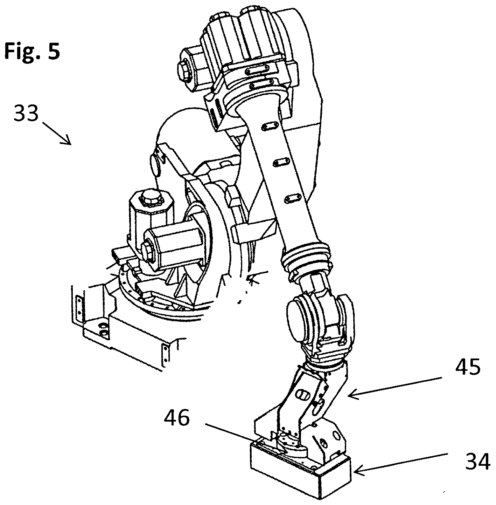

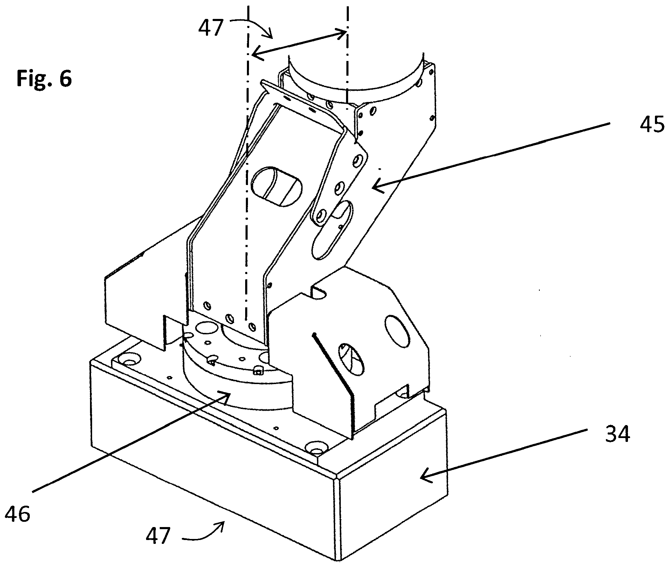

In den Figuren 5 und 6 ist nun nochmals ein Ausführungsbeispiel eines ersten Greifers gezeigt, wie er insbesondere zum Aufnehmen der Werkstücke aus einem Behälter eingesetzt werden kann. Dabei handelt es sich um einen Magnetgreifer 34. Dabei ist an der Unterseite des Greifers eine Magnetgreiffläche 47 vorgesehen. Der Magnetgreifer 34 weist dabei einen Elektromagneten auf, welcher an der Magnetgreiffläche 47 eine Magnetkraft zum Halten von magnetisierbaren Gegenständen erzeugt.

Der Greifer ist gekröpft an dem Endglied des Greifarms angeordnet, bspw. am Endglied des Greifarms eines Roboters 33. Dabei ist eine Mittelachse des Greifers 34 bzw. der Magnetgreiffläche 47 versetzt um einen Abstand 48 zu einer Drehachse des letzten Dreh-Gelenkes des Greifarms angeordnet. Hierfür ist ein gekröpfter Arm 45 vorgesehen, welcher den Magnetgreifer 34 mit dem Greifarm verbindet. Durch die gekröpfte Ausführung des Magnetgreifers ist es möglich, diesen auch im Inneren eines Behälters direkt neben einer Seitenwand des Behälters zum Greifen von Werkstücken einzusetzen. Insbesondere wird so vermieden, dass Störkanten weiter oben am Greifarm ein Heranfahren des Magnetgreifers direkt an einen Wandbereich des Behälters verhindern.

Weiterhin kann eine Ausgleichseinheit 46 vorgesehen sein, wie sie im folgenden noch näher beschrieben wird. Diese verhindert, dass bei Kollision des Greifers 34 mit Störkanten oder mit Werkstücken eine Überlastung des Greifarmes erfolgt. Zudem wird verhindert, dass eine Sicherheitsausschaltung des Roboters aktiviert wird, welche nur manuell wieder überbrückbar wäre.

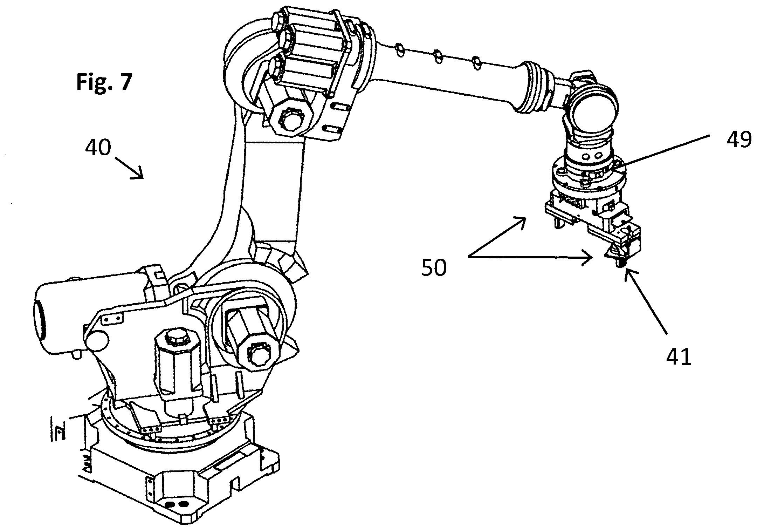

In Figur 7 ist ein Ausführungsbeispiel des zweiten Greifers 41 dargestellt, welcher ebenfalls an einem Greifarm eines Roboters 40 angeordnet ist. Als Greifer wird dabei im Ausführungsbeispiel ein Zweifingergreifer mit Fingern 50 eingesetzt, welche linear verfahrbar sind. Die Finger können dabei in Aussparungen des entsprechend geformten Werkstücks hinein gefahren und durch Auseinanderfahren oder Zusammenfahren das Werkstück greifen. Bei anders geformten Werkstücken können selbstverständlich auch andere mechanische Greifer zum Einsatz kommen, insbesondere Drei- oder Mehrfingergreifer oder Backengreifer. Auch bei dem in Figur 7 gezeigten Ausführungsbeispiel ist eine Ausgleichseinheit 49 vorgesehen, welche den Roboterarm bei Kollisionen vor Überlastung schützt.

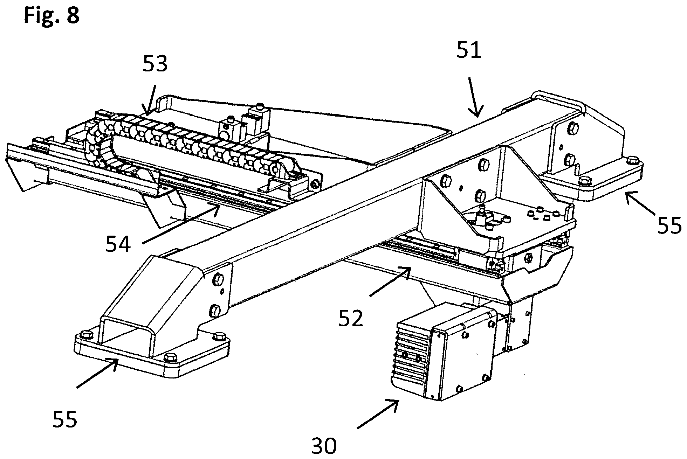

Figur 8 zeigt ein Ausführungsbeispiel einer Objekterkennungseinrichtung zur Erfassung von Werkstücken, welche durch eine Verfahranordnung von einer Ruheposition in eine Messposition verfahrbar ist und zurück.

Die in Figur 8 gezeigte Objekterkennungseinrichtung kann dabei insbesondere bei dem in Figur 4 gezeigten Ausführungsbeispiel als Objekterkennungseinrichtung 30 zum Erfassen der Werkstücke in einem Behälter eingesetzt werden. Die bei dem in Figur 4 gezeigten Ausführungsbeispiel zum Erfassen der Werkstücke auf der Zwischenstation eingesetzte zweite Objekterkennungseinrichtung 42 ist im Ausführungsbeispiel dagegen starr ausgeführt. Alternativ könnte jedoch auch diese Objekterkennungseinrichtung 42 eine Verfahranordnung aufweisen, um von einer Ruheposition in eine Messposition und zurück verfahrbar zu sein.

Die in Figur 8 gezeigte Objekterkennungseinrichtung weist einen Sensor 30 auf, welcher die Werkstücke erfasst. Der Sensor 30 ist an einem Sensorarm 52 angeordnet, welcher an einer Führungsschiene 54 verfahrbar angeordnet ist. Die Führungsschiene 54 ist wiederum an einem Montagebalken 51 angeordnet, um so über die Befestigungsstücke 55 auf einem Podest montiert werden zu können. Die genaue Anordnung der beiden Podestsäulen ist in Figur 4 erkennbar.

Bei dem in Figur 4 gezeigten Ausführungsbeispiel ist die Objekterkennungseinrichtung dabei so auf Podestsäulen angeordnet, dass die Behälter beim Einschleusen in eine Entnahmeposition zwischen den Podestsäulen hindurchgeführt werden können.

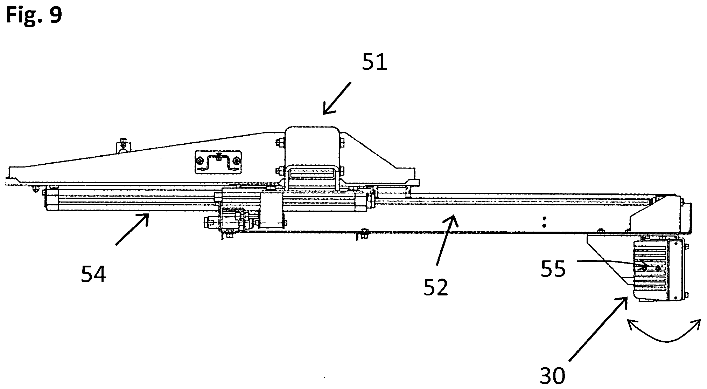

Wie in Figuren 8 und 9 erkennbar, kann der Sensor 30 durch Bewegen des Sensorarms 52 entlang der Führungsschiene 54 verfahren werden. Im Ausführungsbeispiel ist die Objekterkennungseinrichtung dabei so aufgebaut, dass der Sensor 30 in horizontaler Richtung verfahrbar ist.

In der Ruheposition befindet sich die Objekterkennungseinrichtung außerhalb eines Kollisionsbereiches mit dem ersten Greifer 34, so dass dieser freien Zugang zum Behälter hat. Zum Erfassen der Werkstücke im Behälter wird der Sensor 30 dann durch Ausfahren des Sensorarms 52 über den Behälter in die Messposition verfahren, in welcher die Erfassung der Werkstücke erfolgt. In seiner Messposition befindet sich der Sensor 30 in etwa mittig oberhalb des Behälters. Nach der Messung wird der Sensor wieder zurück in die Ruheposition gefahren, in welcher er außerhalb der Grundfläche des Behälters angeordnet ist.

Dabei sind die Bewegungen der Objekterkennungseinrichtung und des Entnahmegreifers 35 miteinander synchronisiert, so dass die Erfassung der Werkstücke in dem Behälter immer dann erfolgt, wenn der Greifer 34 ein Werkstück auf der Zwischenstation ablegt. Danach wird die Objekterkennungseinrichtung in die Ruheposition zurück verfahren, sodass der Greifer 34 ein neues Werkstück aus dem Behälter entnehmen kann. Beim darauffolgenden Ablegen des Werkstücks auf der Zwischenstation erfolgt wiederum eine Messung.

Ein gleiches Vorgehen wäre dabei auch bei der zweiten Objekterkennungseinrichtung 42 und dem zweiten Greifer 41 denkbar.

Alternativ oder zusätzlich könnte die Objekterkennungseinrichtung auch in vertikaler Richtung verfahren werden. Zum einen könnte eine solche vertikale Verfahrbarkeit in gleicher Weise wie die horizontale Verfahrbarkeit eingesetzt werden, um den Sensor aus einem Kollisionsbereich mit dem Greifer herauszufahren, wenn dieser ein Werkstück aufnimmt, und wieder näher an die Werkstücke heranzufahren, um eine Erfassung durchzuführen. Zudem wäre es denkbar, die Objekterkennungseinrichtung bei sich leerendem Füllstand des Behälters in vertikaler Richtung nachzuführen, so dass die Objekterkennungseinrichtung bei der Messung immer in einem gleichbleibenden Abstandsbereich zu den am höchsten angeordneten Werkstücken im Behälter angeordnet ist. Hierdurch kann eine gleichbleibende Erfassungsqualität erreicht werden.

Im Ausführungsbeispiel kann als Sensor der Objekterkennungseinrichtung ein Laserscanner eingesetzt werden.. Der Scanner kann dabei mehrere Laserstrahlen mit geringem Abstand, aussenden, so dass ein Fächer von Laserstrahlen entsteht. Der durch die Laserstrahlen gebildete Fächer wird dann durch Verschwenken des Sensors über den Erfassungsbereich geschwenkt, wodurch eine räumliche Erfassung des Erfassungsbereiches erfolgt. Dabei wird durch Abstandsmessung mittels der Laserstrahlen geometrische Daten erstellt.

Eine Anordnung des Sensors in etwa mittig oberhalb des Behälters hat dabei den Vorteil, dass die Seitenwände des Behälters keine Schatten bilden. Die Verfahrbarkeit des Sensors ermöglicht es dabei, den Sensor in der Messposition in ausreichend geringen Abstand zu den vermessenden Werkstücken zu platzieren, und dennoch nicht in Konflikt mit dem Greifer bzw. den den Greifer bewegenden Greiferarm zu kommen. Dies ist insbesondere beim Erfassen der Werkstücke im Behälter von besonderer Bedeutung, da der Scanner zumindest dann, wenn er nicht vertikal verfahrbar ist, so niedrig über dem Behälter platziert werden muss, dass er auch bei einem fast geleerten Behälter noch mit ausreichender Genauigkeit die Werkstücke erfasst.

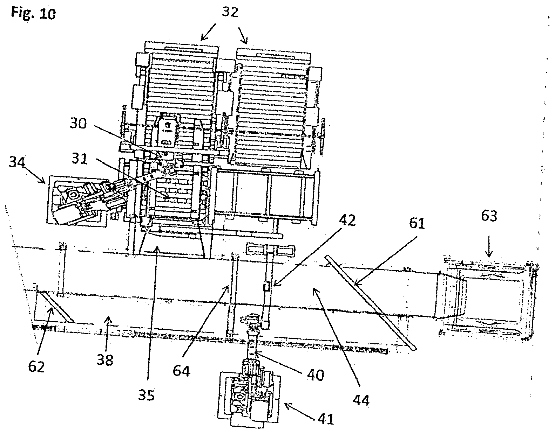

In Figur 10 ist ein weiteres Ausführungsbeispiel einer erfindungsgemäßen Vorrichtung zum automatisierten Entnehmen von Werkstücken aus einem Behälter gezeigt, welches auf dem in Figur 4 gezeigten Ausführungsbeispiel basiert und bei welchem die in Figur 4 lediglich schematisch angedeutete umlaufende Transportstrecke der Zwischenstation vorgesehen ist. Bis auf die unterschiedlich ausgeführte Zwischenstation entsprechen dabei alle Komponenten dem in Figur 4 gezeigten Ausführungsbeispiel, sodass im Hinblick auf den Gesamtaufbau der Vorrichtung auf die dortige Beschreibung verwiesen wird.

Die Zwischenstation weist auch bei dem in Figur 10 gezeigten Ausführungsbeispiel ein erstes Transportband 38 auf, welches die in einem Ablegebereich 35 abgelegten Werkstücke zu einem Entnahmebereich 44 transportiert. Dort werden die Werkstücke durch die Objekterkennungseinrichtung 42 erfasst und durch den Greifer 41, welcher durch den Greifarm 40 bewegt wird, gegriffen und entnommen.

Die in Figur 10 gezeigte Zwischenstation ist nun mit einer Rücklaufstrecke 60 ausgestattet, welche im Entnahmebereich 44 nicht entnommene Werkstücke umlaufen lässt. Die Rücklaufstrecke 60 ist dabei ebenfalls ein Transportband, welches neben dem ersten Transportband 38 angeordnet ist und in Gegenrichtung bewegt wird. Die Rücklaufstrecke 60 sorgt dabei dafür, dass im Entnahmebereich 44 nicht entnommene Werkstücke zurücktransportiert werden und wieder auf das erste Transportband 38 gelangen, so dass sie nochmals in den Entnahmebereich 44 gelangen, wo sie erneut erfasst und gegriffen werden können.

Liegt daher ein Werkstück bei seinem ersten Erfassen in einer solchen Position im Entnahmebereich 44, dass es nicht oder nur sehr schlecht gegriffen werden kann, so kann die Steuerung auf einen Greifversuch verzichten und das Werkstück umlaufen lassen. Die Umlaufstrecke ist dabei so aufgebaut, dass das Werkstück beim nächsten Umlauf höchstwahrscheinlich in einer anderen Position in den Entnahmebereich 44 gelangt, so dass eine hohe Wahrscheinlichkeit besteht, dass das Werkstück beim zweiten Versuch in einer besser zu greifenden Position liegt. In gleicher Weise kann auch mit Werkstücken verfahren werden, bei welchen ein erfolgloser Greifversuch durchgeführt wurde.

Der Entnahmebereich könnte bei dem in Fig. 10 gezeigten Ausführungsbeispiel auch im Bereich der Rücklaufstrecke angeordnet werden, ohne dass sich die Funktion der Zwischenstation ändern würde.

Da die Werkstücke ungeordnet auf den Transportbändern 38 und 60 liegen, ist die Wahrscheinlichkeit sehr hoch, dass sie beim Umlauf ihre Position verändern. Dies kann noch durch weitere Maßnahmen unterstützt werden. So ist beispielsweise ein Anschlag 61 vorgesehen, welcher schräg über das erste Transportband 38 verläuft und die Werkstücke vom ersten Transportband 38 auf die Rücklaufstrecke 60 drängt. In gleiche Weise ist am Ende der Rücklaufstrecke 60 ein Anschlag 62 vorgesehen, welcher das Werkstück wieder zurück auf die erste Transportstrecke 38 befördert. Allein durch den Kontakt mit den Anschlägen und das Drängen auf das jeweils andere Band wird dabei eine Positionsänderung der Werkstücke bewirkt.

Weiterhin kann vorgesehen sein, dass die Werkstücke während des Umlaufes einen Höhenunterschied durchlaufen. Insbesondere kann dabei eine schräge Ebene oder eine Kante mit einem Höhenunterschied vorgesehen sein, über welche die Werkstücke gedrängt werden. Auch hierdurch wird eine Positionsänderung bewirkt. Gleichzeitig können so gegebenenfalls miteinander verhakte Werkstücke voneinander getrennt werden.

Vorteilhafterweise ist dabei in dem Übergangsbereich zwischen dem ersten Transportband 38 und der Rücklaufstrecke 60 eine schräge Ebene vorgesehen, welche die Werkstücke hinunterrutschen. Vorteilhafterweise verläuft dabei die erste Transportstrecke 38 in horizontaler Richtung, während die Rücklaufstrecke 60 schräg angeordnet ist, so dass sich zumindest in einem der beiden Endbereiche der beiden Transportstrecken ein Höhenunterschied ergibt.

Um zu verhindern, dass nicht greifbare Teile für unbegrenzte Zeit auf der Umlaufstrecke verbleiben, kann ein Aussonderungsmodus vorgesehen sein, in welchem unter bestimmten Bedingungen der Umlauf beendet und die Werkstücke in einen Sammelbehälter 63 entleert werden. Insbesondere kann hierfür der Anschlag 61 so bewegt werden, dass die Werkstücke über die erste Transportstrecke 38 bis zu deren Ende und in den dort aufgestellten Behälter 63 transportiert werden.

Insbesondere kann dabei ein Aussonderungsmodus vorgesehen sein, in welchem keine neuen Werkstücke durch den ersten Greifer auf die Zwischenstation gelegt werden. Sodann erfolgt bei allen auf der Zwischenstation befindlichen Werkstücken zumindest ein Greifversuch. Gegebenenfalls können dabei auch mehrere Umläufe durchgeführt werden. Die dann noch auf der Zwischenstation verbleibenden Werkstücke können dann in den Behälter 63 entleert werden. Daraufhin kann wiederum in den normalen Modus geschaltet werden.

Weiterhin kann der Aussonderungsmodus eingesetzt werden, um fälschlicherweise auf die Zwischenstation gelangte Werkstücke auszusondern. So kann der Aussonderungsmodus aktiviert werden, wenn auf der Zwischenstation ein Werkstück erfasst wurde, welches nicht die geforderten Werkstückkriterien erfüllt und daher nicht an einer Zielaufnahme positioniert werden soll.

Bei dem in Figur 10 dargestellten Ausführungsbeispiel einer Zwischenstation ist auch die bereits im Hinblick auf das Ausführungsbeispiel in Figur 4 beschriebene, dort jedoch nicht dargestellte Umorientierungseinrichtung 64 dargestellt. Hierbei handelt es sich um eine Klappe, welche über das erste Transportband 38 zwischen dem Ablegebereich und dem Entnahmebereich angeordnet ist. Die Klappe 64 soll dabei insbesondere auf ihrer Kante stehende Werkstücke umwerfen, um diese besser greifbar zu machen.

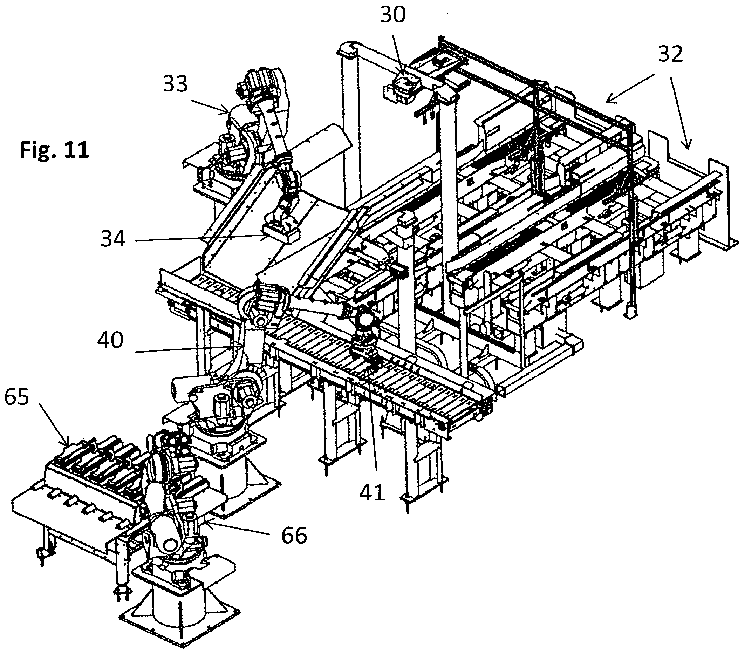

In Figur 11 ist ein weiteres Ausführungsbeispiel einer erfindungsgemäßen Vorrichtung zum automatisierten Entnehmen von in einem Behälter angeordneten Werkstücken gezeigt. Auch dieses Ausführungsbeispiel basiert auf dem in Figur 4 gezeigten Ausführungsbeispiel, so dass im Hinblick auf die Ausgestaltung zunächst auf die Beschreibung des in Figur 4 gezeigten Ausführungsbeispiels verwiesen wird.

Zum einen ist in Figur 11 auch die in Figur 4 lediglich schematisch gezeigte Ein- und Ausschleusung für Behälter mit Werkstücken gezeigt. Diese werden auf einer Seite abgestellt und von dort automatisiert in den Entnahmebereich 31 bewegt. Nun werden die Werkstücke durch den ersten Greifer 34 nacheinander entnommen, bis der Behälter zu 100 % entleert ist. Daraufhin wird der entleerte Behälter zur Ausschleusestrecke bewegt und von dort wieder ausgeschleust.

Vorteilhafterweise erfolgt dabei nach der Entnahme des letzten Werkstückes nochmals eine Sicherheitserfassung des Behälterinneren, um sicherzustellen, dass tatsächlich keine Werkstücke mehr im Behälter verblieben sind. Hat daher die Steuerung bei einem Erfassungsvorgang nur ein einziges Werkstück identifiziert, und wurde der Greifer entsprechend angesteuert, um dieses zu entnehmen, wird dennoch noch ein weiterer Erfassungsvorgang eingeleitet. Nur so kann sichergestellt werden, dass das zuletzt erfasste Werkstück auch tatsächlich entnommen wurde.

Weiterhin zeigt das in Figur 11 gezeigte Ausführungsbeispiel eine zweite Zwischenstation 65, auf welcher die von der ersten Zwischenstation durch den Greifer 41 entnommenen Werkstücke abgelegt werden, um erneut gegriffen zu werden. Das Ablegen auf der zweiten Zwischenstation erfolgt dabei in einer definierten Position, wobei das Ablegen dazu dient, beim Aufnehmen genauer greifen zu können und/oder die Ausrichtung des Werkstücks am Greifer verändern zu können. Weiterhin kann die zweite Zwischenstation auch als Pufferspeicher dienen.

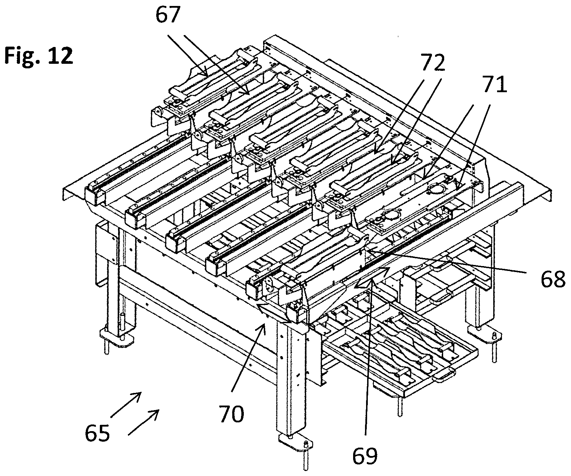

Ein Ausführungsbeispiel einer solchen Zwischenstation 65 ist in Figur 12 gezeigt. Die Zwischenstation weist mindestens eine Aufnahme 67 für die Werkstücke auf, in welche das Werkstück in einer definierten Position und Ausrichtung ablegbar ist. Im Ausführungsbeispiel sind dabei mehrere solche Aufnahmen 67 nebeneinander angeordnet, so dass die Zwischenstation auch als Pufferspeicher dient.

Die Aufnahmen 67 weisen eine Ausgleichsvorrichtung 70 auf, welche ein Ablegen der Werkstücke in der Aufnahme 67 auch mit einem gewissen Positionsversatz erlaubt, indem die Aufnahme durch den Kontakt mit dem abzulegenden Werkstück bewegt wird. Hierzu weist die Aufnahme 67 Aufnahmeschrägen 72 auf, gegen welche ein schlecht positioniertes Werkstück zuerst stößt und dabei eine Bewegung der Aufnahme hervorruft, durch welche das Werkstück in der Aufnahme ablegbar ist.

Die Aufnahme 67 erlaubt so ein Ablegen von Werkstücken in einem definierten Positionsbereich und erlaubt damit insbesondere auch das Ablegen von nicht exakt in einer Soll-Position gegriffenen Werkstücken.

Die Ausgleichseinheit 70 ist auf der Zwischenstation fixierbar, so dass die Aufnahme und damit das Werkstück zum Entnehmen in einer definierten Soll-Position angeordnet ist. Hierdurch kann das Entnehmen des Werkstückes mit einer größeren Genauigkeit erfolgen.

Die Aufnahmen 67 sind an der Zwischenstation auf Schienen 69 verschiebbar. Dabei können die Aufnahmen von einer Beladeposition, in welcher die Ausgleichseinheit eine Bewegung der Aufnahmen 67 erlaubt, in eine Entnahmeposition verschoben werden, in welcher die Ausgleichseinheit fixiert ist. Hierfür sind Anschläge 71 vorgesehen, in welche die Aufnahme 67 hineingefahren wird und welche die Aufnahme in einer definierten Position fixieren.

Das Ablegen und das Entnehmen von Werkstücken auf die zweite Zwischenstation 65 erfolgt dabei vorteilhafterweise jeweils durch mechanische Greifer, da diese eine relativ hohe Greifgenauigkeit aufweisen, durch welche die Werkstücke definiert in den Aufnahmen abgelegt und mit höherer Genauigkeit wieder aufgenommen werden können.

Das Greifen der Werkstücke auf der zweiten Zwischenstation erfolgt dabei ohne eine zuvorige Erfassung der Werkstücke, indem die Greifer an die bekannte Entnahmeposition der Aufnahme gefahren werden.

Weiterhin sind die Aufnahmen so ausgestaltet, dass die Werkstücke von zwei unterschiedlichen Richtungen aus gegriffen werden können. Im Ausführungsbeispiel weisen die Werkstücke dabei Ausnahmen aus, in welche die Finger eines Fingergreifers eingreifen. Die Aufnahmen sind dabei so gestaltet, dass die Ausnahmen in den Werkstücken von zwei Seiten zugänglich sind, wenn ein Werkstück in der Aufnahme angeordnet ist. Hierdurch kann die Ausrichtung des Werkstücks am Greifer umgekehrt werden, indem das Werkstück beim Ablegen von einer Seite gegriffen wird, beim Aufnehmen dagegen von der anderen Seite.

Dabei kann das Ablegen und das Aufnehmen durch den gleichen Greifer erfolgen. Bei dem in Figur 11 gezeigten Ausführungsbeispiel werden jedoch zwei separate Greifer eingesetzt.

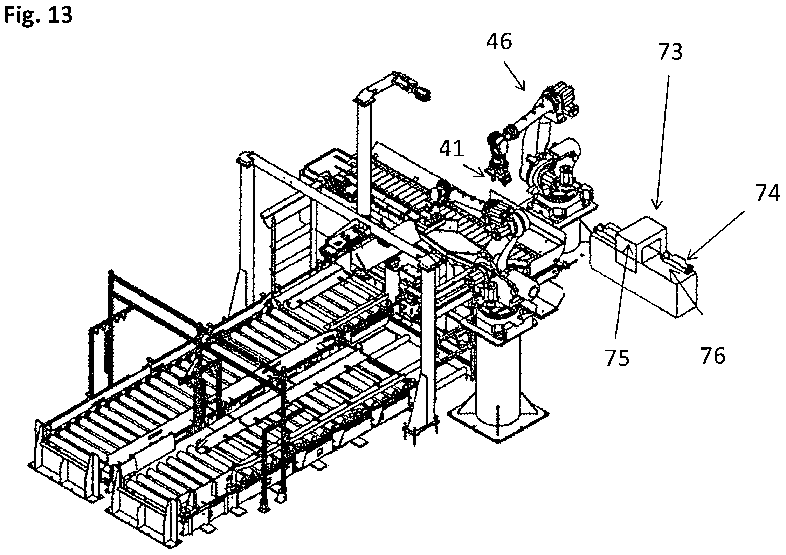

Bei dem in Figur 13 gezeigten Ausführungsbeispiel einer erfindungsgemäßen Vorrichtung, welche ebenfalls auf dem in Figur 4 gezeigten Ausführungsbeispiel beruht, ist nun ein weiteres Ausführungsbeispiel für eine zweite Zwischenstation 73 dargestellt. Auch diese Zwischenstation weist mindestens eine Aufnahme 74 auf, in welcher Werkstücke definiert abgelegt werden können. Die Aufnahme ist dabei genauso ausgestaltet wie die in Figur 12 gezeigten Aufnahmen.

Die in Figur 13 gezeigte Zwischenstation weist dabei ein Transportband auf, durch welches die auf dem Transportband zumindest in einem gewissen Umfang bewegliche Aufnahme 74 gegen Anschläge gefahren werden kann, um sie in ihrer Position zu fixieren. Auch hierdurch wird eine Ausgleicheinheit geschaffen, welche ein Ablegen der Werkstücke mit einem gewissen Versatz in der Aufnahme 74 erlaubt, und das Werkstück bzw. die Aufnahme zur Entnahme dennoch in eine definierte Position verfährt, so dass mit höherer Genauigkeit wieder gegriffen werden kann. Weiterhin kann auch hier von beiden Seiten gegriffen werden, um die Ausrichtung des Werkstücks am Greifer zu verändern.

Die in Figur 13 gezeigte Zwischenstation 73 ist weiterhin mit einer Funktionseinheit 75 ausgestattet, welche die Werkstücke auf der Zwischenstation durchlaufen. Bei der Funktionseinheit handelt es sich dabei um eine Entmagnetisierungsstation, durch welche die Werkstücke auf der Zwischenstation geführt werden.

Bei dem in Figur 13 gezeigten Ausführungsbeispiel wird dabei der gleiche mechanische Greifer 41 sowohl zum Ablegen der Werkstücke auf der Zwischenstation 73, als auch zum Entnehmen der Werkstücke eingesetzt.

Weiterhin kann bei einer Vorrichtung zur automatisierten Handhabung von Werkstücken gemäß der vorliegenden Erfindung eine Bestimmung der Greifgenauigkeit erfolgen. Insbesondere kann dabei bestimmt werden, ob und/oder wie stark die Position eines am Greifer aufgenommenen Werkstücks relativ zum Greifer von einer vorgegebenen Soll-Greifposition oder einem vorgegebenen Soll-Greifpositionsbereich abweicht. Vorteilhafterweise wird der Verfahrensablauf der Handhabung dann in Abhängigkeit von dem Ergebnis einer solchen Greifgenauigkeitsbestimmung angesteuert.

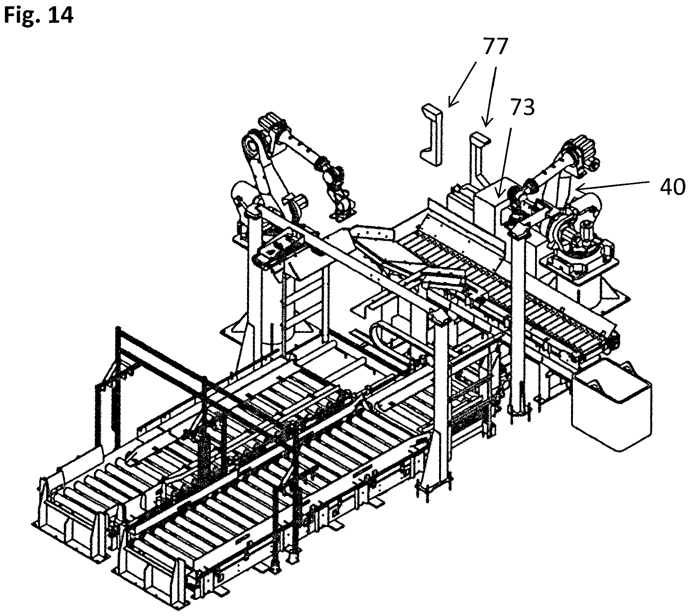

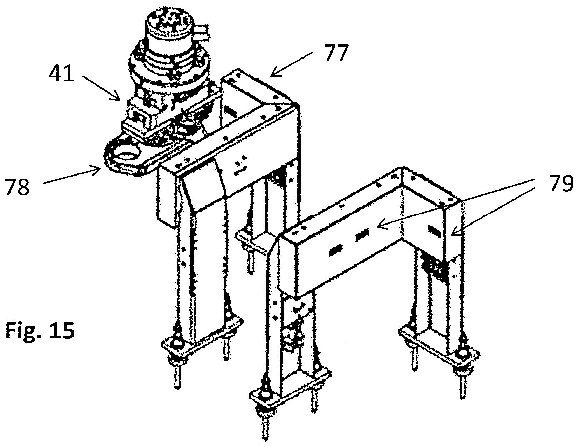

Dabei ist in den Figuren 14 und 15 ein Ausführungsbeispiel einer erfindungsgemäßen Vorrichtung dargestellt, bei welcher die Greifgenauigkeit durch Heranfahren des Greifers mit dem Werkstück an eine separate Messeinrichtung 77 bestimmt wird. Hierfür wird der Greifer 41, wenn er ein Werkstück 78 gegriffen hat, in eine definierte Position vor die Messeinrichtung 77 gefahren. Die Messeinrichtung 77 bestimmt dann die Position des Werkstückes 78, und kann so aus der bekannten Position des Greifers und der Position des Werkstücks die relative Position zwischen Werkstück und Greifer bestimmen. Hierdurch ist eine Bestimmung der Greifgenauigkeit bzw. der Position des Werkstücks am Greifer möglich.

Im Ausführungsbeispiel weist die separate Messeinrichtung 77 dabei Lasersensoren 79 auf. Im Ausführungsbeispiel wird dabei eine Dreipunktmessung durchgeführt.

Eine Bestimmung der Greifgenauigkeit kann insbesondere bei mechanischen Greifern von Vorteil sein, da diese zwar ein relativ exaktes Greifen der Werkstücke ermöglichen, jedoch auch hier Freiheitsgrade beim Greifen bestehen. Handelt es sich um einen Finger- oder Backengreifer, kann das Werkstück üblicherweise zumindest im Hinblick auf die Zustellrichtung des Greifers an das Werkstück in unterschiedlichen Positionen gegriffen werden. Beim Fingergreifer betrifft dies die Frage, wie weit die Finger in eine entsprechende Aufnahme am Werkstück eingreifen bzw. wie weit die Finger das Werkstück umgreifen.

Bei dem in Figur 14 gezeigten Ausführungsbeispiel einer erfindungsgemäßen Vorrichtung, welche auf den in Figur 4 gezeigten Ausführungsbeispiel basiert, wird dabei die Greifgenauigkeit des Greifers 41 bestimmt, welcher zum Entnehmen der Werkstücke von der ersten Zwischenstation eingesetzt wird. Alternativ könnte jedoch auch die Greifgenauigkeit beim Entnehmen eines Werkstücks von einer zweiten Zwischenstation bestimmt werden.

Alternativ zu der in Figuren 14 und 15 gezeigten separaten Messeinrichtung, an welche der Greifer herangefahren werden kann, kann auch ein am Greifer selbst angeordneter Sensor zur Bestimmung der Greifgenauigkeit eingesetzt werden. Ein Ausführungsbeispiel für einen solchen Sensor wird im folgenden noch näher beschrieben.

Das Ergebnis der Bestimmung der Greifgenauigkeit kann dabei in unterschiedlicher Art und Weise zur Ansteuerung der Vorrichtung herangezogen werden:
Zu einen ist es möglich, dass ein bei dieser Bestimmung erkannter Greiffehler beim Ablegen des Werkstückes durch eine entsprechende Ansteuerung des Greifers bzw. des diesen bewegenden Greifarmes ausgeglichen wird. Dies entspricht im Wesentlichen einer in Abhängigkeit von einer Abweichung des Werkstücks von einer Soll-Greifposition veränderten Nullpunktverstellung des Greifers beim Ablegen.

Weiterhin ist es denkbar, dass schlecht gegriffene Werkstücke wieder abgelegt werden, um erneut gegriffen zu werden. Insbesondere kann ein solches Vorgehen sinnvoll sein, wenn die Greifgenauigkeit außerhalb eines vorgegebenen Zulässigkeitsbereiches liegt.

Insbesondere kann dabei das Werkstück beim Greifen von einer Zwischenstation mit einem Transportband, wie sie beispielsweise in Figur 4 oder 14 dargestellt ist, zurück auf das Transportband gelegt werden, wenn die Greifgenauigkeit gewisse Kriterien unterschreitet. In vorteilhafter Weise wird das Werkstück dabei in einer Position auf das Transportband abgelegt, von welcher aus das Werkstück erneut in den Entnahmebereich gelangt. Vorteilhafterweise wird das Werkstück dabei erneut erfasst und dann anhand der hieraus ermittelten Daten erneut gegriffen. Dabei ist die Wahrscheinlichkeit hoch, dass das Werkstück nun mit ausreichender Genauigkeit gegriffen werden kann.

Dabei ist auch eine Kombination der beiden Vorgehensweisen denkbar. Liegt also die Genauigkeit außerhalb eines zulässigen Bereiches, so wird das Werkstück zurückgelegt. Ansonsten wird die ermittelte Abweichung von einer Soll-Griffposition beim Ablegen des Werkstückes durch eine entsprechende Bewegung des Greifers ausgeglichen.

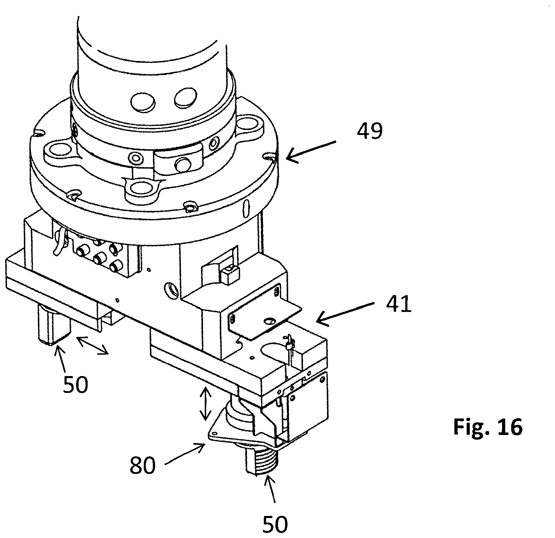

In Figur 16 ist ein Ausführungsbeispiel eines Greifers mit einem Stabilisatorelement dargestellt. Im Ausführungsbeispiel handelt es sich dabei um einen mechanischen Greifer, mit welchem das Werkstück gegriffen wird. Um Positionsänderungen des Werkstückes am Greifer zu verhindern, während der Greifer bewegt wird, wird das Stabilisatorelement 80 an das gegriffene Werkstück herangefahren. Das Stabilisatorelement 80 weist eine Stabilisatorplatte auf, an welcher Kontaktelemente zum Kontaktieren des Werkstückes vorgesehen sind. Die zusätzlichen Kontaktpunkte sorgen so für eine Lagefixierung des Werkstückes am Greifer.

Im Ausführungsbeispiel ist der Greifer als Zweifingergreifer mit den beiden Greiffingern 50 ausgeführt, welche in Ausnehmungen des Werkstückes zum Greifen eingeführt werden. Die durch die beiden Greiffinger 50 bereitgestellten zwei Kontaktpunkte fixieren das Werkstück jedoch nicht in einer eindeutigen Position zum Greifer, so dass erst die weiteren Kontaktpunkte des Stabilisierungselements eine definierte Lage des Werkstücks am Greifer herstellen. Vorteilhafterweise sind die Kontaktpunkte des Stabilisatorelementes dabei entfernt von einer die beiden Greiffinger 50 verbindenden Linie angeordnet.

Im Ausführungsbeispiel ist das Stabilisatorelement 80 im Bereich eines der beiden Greiffinger angeordnet und um diesen herum angebracht. Das Stabilisatorelement könnte jedoch auch in jeder anderen Position am Greifer angeordnet sein.

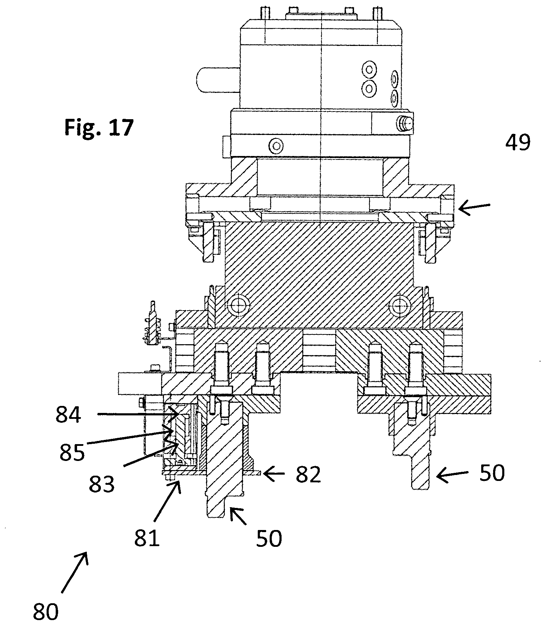

Der Aufbau des Stabilisatorelementes ist nochmals in der in Figur 17 dargestellten Schnittansicht zu erkennen. Dabei ist die Stabilisatorplatte 81 zu erkennen, an welcher beispielsweise im Bereich 82 Kontaktelemente angeordnet werden können.

Die Stabilisatorplatte 81 umgibt den Greiffinger 50 dabei im Ausführungsbeispiel ring- bzw. hufeisenförmig.

Die Stabilisatorplatte 81 ist an einem Zylinder 83 angeordnet, durch welchen sie an das Werkstück herangefahren werden kann. Bei dem Zylinder 83 handelt es sich um einen Pneumatikzylinder. Durch Anlegen von Pneumatikdruck an der einen Seite des Zylinders kann so das Stabilisatorelement gegen das Werkstück gefahren oder bei Anlegen von Druck an der anderen Seite des Zylinders eingefahren werden.

Die Endanschläge 84 und 85 des Zylinders 83 sind mit Sensoren ausgestattet, welche erkennen, ob sich das Stabilisatorelement in einem seiner Endanschlagsbereiche befindet. Hierdurch ist eine Bestimmung der Greifgenauigkeit möglich, da die Ausfahrlänge des Stabilisatorelementes von der Position des gegriffenen Werkstückes am Greifer abhängt.

Befindet sich das Stabilisatorelement dabei im aktiven Zustand in einem seiner Endanschlagsbereiche, wird auf eine ungenügende Greifgenauigkeit geschlossen, da der Greifer dann entweder zu weit in das Werkstück hinein gefahren wurde oder nicht weit genug. Selbstverständlich könnte durch eine Messung der Ausschublänge des Zylinders 83 auch eine genauere Bestimmung der Greifgenauigkeit erfolgen.

Alternativ zu der in das Stabilisatorelement 82 integrierten Sensoranordnung zur Bestimmung der Greifgenauigkeit wäre auch ein separater Sensor denkbar, welcher am Greifer angeordnet ist. Beispielsweise könnte dabei ein am Greifer angeordneter Laser-Sensor eingesetzt werden, um die Greifgenauigkeit zu bestimmen.

In Figur 17 ist auch eine Ausgleichseinheit 49 zu sehen, über welche der Greifer an einem Greifarm befestigt ist.

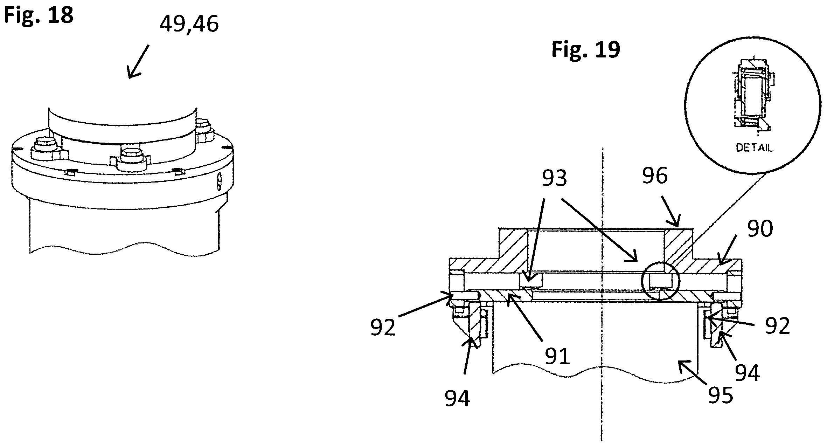

In Figuren 18 und 19 ist ein erstes Ausführungsbeispiel einer solchen Ausgleichseinheit näher dargestellt. Dabei ist ein Basiselement 90 vorgesehen, an welchem eine Ausgleichsplatte 91 angeordnet ist. Die Ausgleichsplatte 91 wird von Halteelementen 92 des Basiselementes 90 umgriffen. Zwischen Basiselement 90 und Ausgleichsplatte 91 ist eine Federanordnung 93 angeordnet, welche die Ausgleichsplatte 91 an die Haltebereiche 92 presst. Im Ausführungsbeispiel sind dabei mehrere Spiralfedern vorgesehen, welche in entsprechenden Federhülsen angeordnet sind. Jedoch sind auch beliebige andere Ausführungen einer solchen Federanordnung denkbar.

Die Federkraft der Federanordnung ist dabei so gewählt, dass die Ausgleichsplatte 91 im Normalbetrieb des Greifers starr an der Basiseinheit 90 gehalten ist. Erst im Falle einer Kollision des Greifers bzw. des darin angeordneten Werkstückes mit einer Störkante oder einem anderen Werkstück erlaubt die Federanordnung 93 eine Relativbewegung zwischen Ausgleichsplatte 91 und Basiselement 90. Hierdurch werden die auf den Greifarm ausgeübten Kräfte begrenzt. Insbesondere kann so verhindert werden, dass die Notausschaltung eines zum Bewegen des Greifers eingesetzten Roboters oder Flächenportals eingreift.

Die Kraft der Federanordnung 93 ist dabei einstellbar, so dass das Ausgleichselement an den entsprechenden Einsatzzweck angepasst werden kann. Die Einstellung der Federkraft kann dabei insbesondere dadurch erfolgen, dass der Greifer zusammen mit einem aufgenommenen Werkstück in eine 90°-Position zur Vertikalen verfahren wird, so dass die statische Belastung durch den Greifer und das Werkstück auf die Ausgleichseinheit maximal sind. In dieser Position wird die Vorspannung der Federanordnung 93 so eingestellt, dass keine Auslenkung der Ausgleichseinheit erfolgt. Hierdurch wird sichergestellt, dass unabhängig von der Ausrichtung des Greifers keine Auslenkung der Ausgleichseinheit allein durch die statischen Kräfte erfolgt, welche durch den Greifer und ein aufgenommenes Werkstück auf die Ausgleichseinheit aufgebracht werden. Gegebenenfalls kann die Vorspannung der Federanordnung 93 dabei noch um einen bestimmten Wert erhöht werden, um auch dynamische Belastungen beispielsweise beim Beschleunigen des Greifers bzw. des Greiferarmes zu berücksichtigen.

Die Vorspannung der Federanordnung 93 muss jedoch so gewählt werden, dass die Ausgleichseinheit auslöst, bevor die Notabschaltung des Greiferarmes eingreift.

Das erste Ausführungsbeispiel einer Ausgleichseinheit kann dabei bspw. zusammen mit einem mechanischen Greifer eingesetzt werden. Insbesondere kann das erste Ausführungsbeispiel einer erfindungsgemäßen Ausgleichseinheit dabei für den zweiten Greifer eingesetzt werden, welcher die Werkstücke von der Zwischenstation aufnimmt. Weiterhin kann das erste Ausführungsbeispiel der Ausgleichseinheit auch mit dem dritten Greifer eingesetzt werden, welcher die Werkstücke von der zweiten Zwischenstation abnimmt.

Das erste Ausführungsbeispiel der Ausgleichseinheit hat dabei eine sphärische Arbeitsweise, und erlaubt insbesondere Kipp-Ausgleichsbewegungen. Vorteilhafterweise erlaubt die Ausgleichseinheit dabei einen maximalen Ausgleichswinkel zwischen 2° und 10°, insbesondere zwischen 4° und 6°.

Dabei sind weiterhin Führungselemente vorgesehen, welche eine Verdrehung der Ausgleichsplatte 91 gegenüber dem Basiselement 90 verhindern. Im Ausführungsbeispiel greifen hierfür Führungsstifte seitlich in entsprechende Aussparungen der Ausgleichsplatte 91 ein.

Die Ausgleichsplatte ist dabei im Ausführungsbeispiel rund und weist abgerundete Kanten auf, um eine Verschwenkbewegung um beliebige Achsen zu ermöglichen.

Weiterhin sind Auflagesensoren 94 im Bereich der Haltebereiche 92 angeordnet. Diese überwachen, ob die Ausgleichsplatte 91 auf den Haltebereichen aufliegt oder ausgelenkt wurde. Hierdurch können Kollisionen des Greifers erfasst werden. Bei den Sensoren 94 handelt es sich dabei im Ausführungsbeispiel um induktive Sensoren. Im Ausführungsbeispiel sind dabei mehrere Sensoren vorgesehen, so dass Informationen über die Richtung der Auslenkung der Ausgleichsplatte 91 gewonnen werden können. Insbesondere sind dabei vier Sensoren vorgesehen.

Die von den Sensoren gewonnenen Daten können dabei wie folgt zur Ansteuerung des Greifers herangezogen werden: Im Normalbetrieb lenkt die Ausgleichseinheit nicht aus, so dass der Greifer eine definierte Position gegenüber dem Greifarm einnimmt, welche von der Ausgleichseinheit unbeeinflusst bleibt. Bei einer Kollision lenkt die Ausgleichseinheit jedoch aus, was durch die Sensoren 94 erkannt wird.

In diesem Fall erlaubt die Steuerung noch einen gewissen Verstellweg des Greifarms, welcher jedoch kleiner ist als der Ausgleichsweg der Ausgleichseinheit.

Überschreitet die Bewegung des Greifarms jedoch diesen zulässigen Verstellweg nach dem Erkennen einer Kollision, wird der Greifvorgang abgebrochen und der Greifer zurück in eine Nullposition verfahren. Daraufhin wird ein Greifvorgang erneut gestartet, indem zunächst die Werkstücke erfasst und dann eine neue Greifbewegung eingeleitet wird. Die Ausgleichseinheit schützt dabei vor einer Notausschaltung des Roboters, welche nur manuell wieder aufgehoben werden könnte.

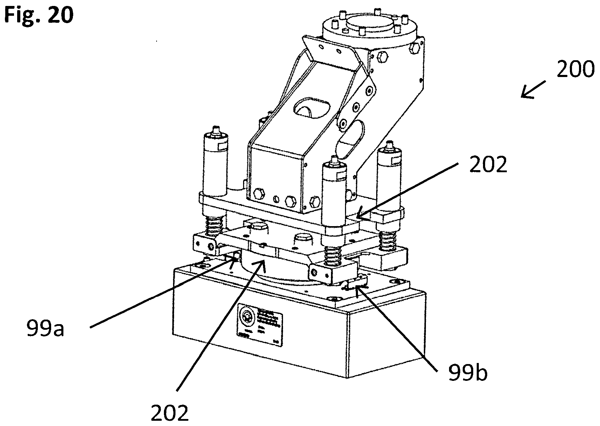

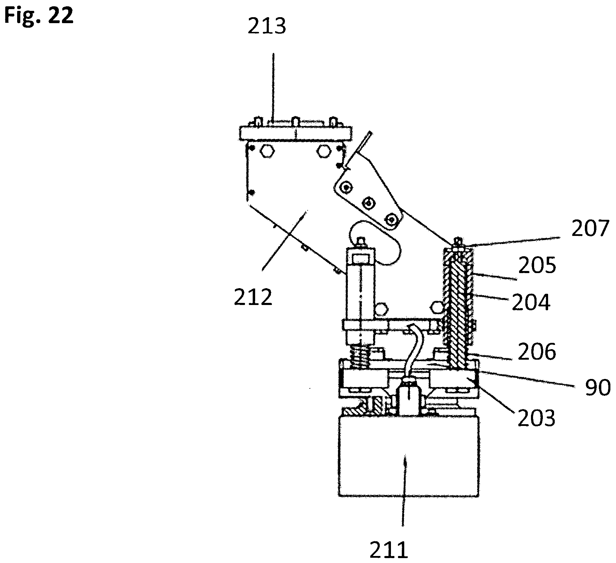

In Fig. 20 bis 22 ist ein zweites Ausführungsbeispiel einer Ausgleichseinheit gezeigt. Diese Ausgleichseinheit kombiniert eine Ausgleichseinheit mit sphärischer Wirkungsweise, wie sie in Fig. 18 und 19 dargestellt ist, mit einer Ausgleichseinheit mit linearer Wirkungsweise, um so den Ausgleichsweg zu erhöhen.

Die gesamte Ausgleichseinheit 200 umfasst dabei zunächst den sphärischen Ausgleichsteil 201, welcher im Aufbau im Wesentlichen dem ersten Ausführungsbeispiel einer Ausgleichseinheit entspricht, und kombiniert diesen in Serie mit einem zweiten Ausgleichsteil 202, welcher eine lineare Wirkungsweise hat.

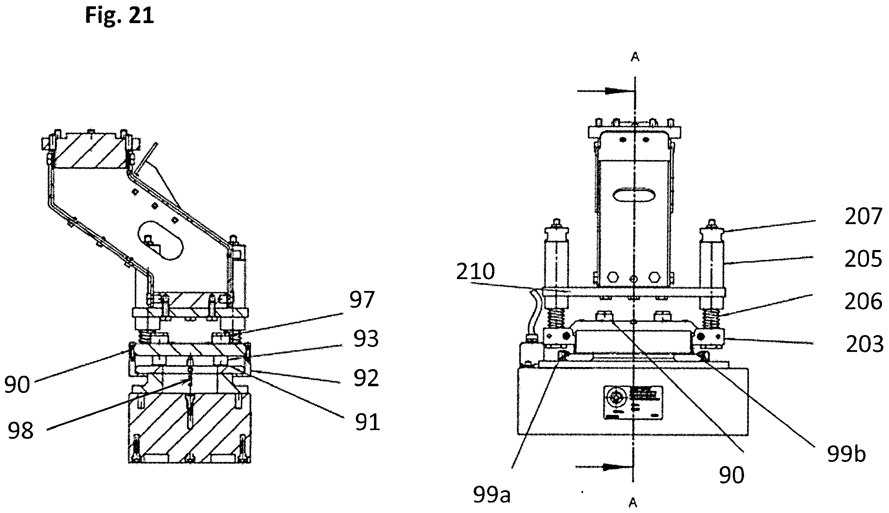

Wie in Fig. 21 insbesondere im Schnitt gut zu erkennen, weist der sphärisch wirkende Ausgleichsteil 201 den gleichen mechanischen Aufbau auf wie das erste Ausführungsbeispiel einer Ausgleichseinheit, wobei hierfür auch die gleichen Bezugszeichen verwendet wurden. Insbesondere ist dabei ein Basiselement 90 vorgesehen, an welchem die Ausgleichsplatte 91 angeordnet und von Halteelementen 92 des Basiselements 90 umgriffen wird. Zwischen Basiselement 90 und Ausgleichsplatte 91 ist eine Federanordnung 93 angeordnet, welche die Ausgleichsplatte 91 gegen die Haltebereiche 92 presst. Dabei sind Verstellelemente 97 gezeigt, über welche die Vorspannung der Federanordnung 93 verändert werden kann.

Der Aufbau des sphärisch wirkenden Ausgleichsteils 201 unterscheidet sich von dem ersten Ausführungsbeispiel einer erfindungsgemäßen Ausgleichseinheit lediglich im Hinblick auf den Sensor, welcher zum Detektieren einer Ausgleichsbewegung eingesetzt wird. Anders als im ersten Ausführungsbeispiel wird dabei eine Lichtschranke mit einem Sender 99a und einem Empfänger 99b eingesetzt, dessen Lichtweg durch eine Bohrung 98 durch die Ausgleichsplatte 91 verläuft. Wird die Ausgleichsplatte 91 dabei ausgelenkt, so unterbricht sie den Lichtweg der Lichtschranke.

Der Sensor erkennt damit die Ausgleichsbewegung des sphärisch wirkenden Ausgleichsteils 201. Für den linear wirkenden Ausgleichsteil 202 ist dagegen kein Sensor vorgesehen.

Der linear wirksame Ausgleichsteil 202 ist dabei zwischen dem Basiselement 90 und dem Greifarm angeordnet. Dabei sind in den Eckbereichen des Basiselementes 90 Befestigungsbereiche 203 vorgesehen, an welchen Stangen 204 angeordnet sind. Die Stangen 204 sind linear verschieblich in Führungen 205 geführt, welche an einer Platte 210 angeordnet sind. Die Platte 210 ist dann wiederum mit dem Ende des Greifarmes verbunden. Die Bewegung der Stangen 204 in den Führungen 205 erfolgt gegen die Vorspannung einer Federanordnung 206, welche über Verstellelemente 207 einstellbar ist.

Die zweistufige Ausgleichseinheit ist im Ausführungsbeispiel mit einem Magnetgreifer 211 kombiniert, und über eine gekröpfte Greifarmverlängerung 212 an einem Greifarm, insbesondere an einem Roboterarm ankuppelbar. Hierfür weist die Greifarmverlängerung 212 eine Ankuppelfläche 213 auf, mit welchem sie am letzten Drehgelenk eines Roboterarms ankuppelbar ist.

Die beiden Ausgleichsteile 201 und 202 der Ausgleichseinheit sind dabei so ausgelegt, dass zunächst die sphärisch wirkende Ausgleichseinheit 201 auslenkt, und erst dann die linear wirkende Ausgleichseinheit 202. Die linear arbeitende Ausgleichseinheit 202 kann dabei einen Ausgleichsweg zwischen 1,5 und 5cm aufweisen, bevorzugt zwischen 2 und 3cm. Dieser Ausgleichsweg erlaubt es, die Bewegung des Greifers bei einer Kollision rechtzeitig zu Bremsen, bevor der gesamte Ausgleichsweg der Ausgleichseinheit ausgenutzt wurde.

Die Vorspannung der Federeinheiten des zweiten Ausführungsbeispiels einer Ausgleichseinheit könnten in gleicher Weise eingestellt werden, wie die Federspannung beim ersten Ausführungsbeispiel eines Ausgleichselements. Insbesondere könnte dabei die Vorspannung der Federeinheit 93 so eingestellt werden, dass sie auch bei einem um 90° zur Seite geschwenkten Greifer die statischen Lasten aus dem Greifer und einem angehängten Werkstück aufnimmt, ohne dass die Ausgleichseinheit auslenkt. Die Vorspannung der Federeinheit 206 des linearen Teils der Ausgleichseinheit würde dann entsprechend größer eingestellt. Hierbei muss jedoch berücksichtigt werden, dass die Vorspannungen der beiden Teile der Ausgleichseinheit so eingestellt werden müssen, dass die Ausgleichseinheiten noch unterhalb der maximalen Belastungsgrenze des Roboterarms auslenken. Dies ist insbesondere bei sehr schweren Greifern oder sehr schweren Werkstücken, bei welchen bereits die statische Belastung nahe der Maximalbelastung des Greifarms liegt, schwierig zu verwirklichen.

Alternativ kann daher die Vorspannung des sphärischen Teils der Ausgleichseinheit so eingestellt werden, dass sie lediglich die statische Belastung durch den Magnetgreifer aufnimmt, wenn sich dieser in einer 90° zur Seite gerichteten Position befindet, bei einem angehängten Werkstück in dieser Position dagegen bereits auslenkt.

Die vorliegende Erfindung macht sich dabei zu Nutze, dass der Greifer mit aufgenommenem Werkstück gleich nach dem Aufnehmen in eine Verfahrstellung gefahren werden kann, in welcher die Greiffläche nach unten zeigt, so dass die statischen Belastungen durch den Greifer und das Werkstück von der Ausgleichseinheit aufgenommen werden, ohne dass diese ausgelenkt würde. Eine schräge Ausrichtung des Greifers ist dagegen nur beim Heranfahren an das Werkstück notwendig, um die Greiffläche des Greifers mit der Hauptfläche oder den Angriffspunkten des Werkstücks in Deckung zu bringen.

Vorteilhafterweise fährt dabei der Greifer in einer Richtung senkrecht zu seiner Greiffläche an das Werkstück heran, greift dieses, und wird dann in Gegenrichtung zusammen mit dem Werkstück wieder zurückgefahren. Dabei wird das Signal des Sensors der Ausgleichseinheit für eine gewisse Wegstrecke beim Zurückfahren nicht beachtet, um eine Auslenkung der Ausgleichseinheit allein durch die statische Belastung durch das angehängte Werkstück und / oder dynamische Belastungen durch das Anfahren des Greifarms nicht fälschlicher Weise als Kollision zu werten. Während dieser Wegstrecke wird gleichzeitig der Greifer in eine Verfahrposition verfahren, in welcher die Greiffläche und damit das Werkzeug vertikal nach unten zeigen und damit nicht gegen die Federelemente der Ausgleichseinheit wirken.

Ist der Greifer um eine gewisse Strecke zurückgefahren und wurde er in die Verfahrposition geschwenkt, wird das Signal des Sensors der Ausgleichseinheit wieder dazu genutzt, um Kollisionen des Greifers bzw. des Werkstückes mit Störkanten zu detektieren.

Beim Heranfahren des Greifers an ein Werkstück kann das Signal des Sensors der Ausgleichseinheit zudem dazu genutzt werden, um den Kontakt des Greifers mit dem Werkstück zu detektieren. Der Greifer wird dabei langsam an das Werkstück herangefahren, bis die Ausgleichseinheit auslenkt.

Unabhängig von der genauen Ausführung der Ausgleichseinheit kann dabei gemäß der vorliegenden Erfindung je nachdem, in welchem Bereich sich der Greifer befindet, mit unterschiedlichen Verfahrgeschwindigkeiten für den Greifarm gearbeitet werden. In einem Bereich, in welchem sich der Greifer außerhalb des Behälters befindet und damit keine Kollision mit Störkanten zu befürchten ist, kann der Greifarm dabei im Eilgang bewegt werden, d.h. mit einer hohen Geschwindigkeit. Befindet sich der Greifer dagegen im Bereich des Behälters, so dass mit Kollisionen gerechnet werden muss, arbeitet er bevorzugt mit einer zweiten, niedrigeren Geschwindigkeit. Die Geschwindigkeit ist dabei so gewählt, dass der Greifer bei einer Kollision mit einer Störkante gestoppt werden kann, bevor der Ausgleichsweg der Ausgleichseinheit komplett aufgebraucht ist und die Ausgleichseinheit keine weitere Ausgleichsbewegung zulässt. Im Nahbereich zu dem aufzunehmenden Werkstück wird der Greifer weiterhin bevorzugt mit einer dritten, noch niedrigeren Geschwindigkeit verfahren. Dies erlaubt bei der Detektion einer Kollision noch einen gewissen Verfahrweg des Greifers bzw. Greifarms, bevor dessen Bewegung gestoppt werden muss.

Ausführungsbeispiele der Verfahren gemäß der vorliegenden Erfindung sollen nun noch einmal anhand von Ablaufschemata näher dargestellt werden. Diese können bevorzugt unter Verwendung von Vorrichtungen durchgeführt werden, wie sie oben beschrieben wurden.

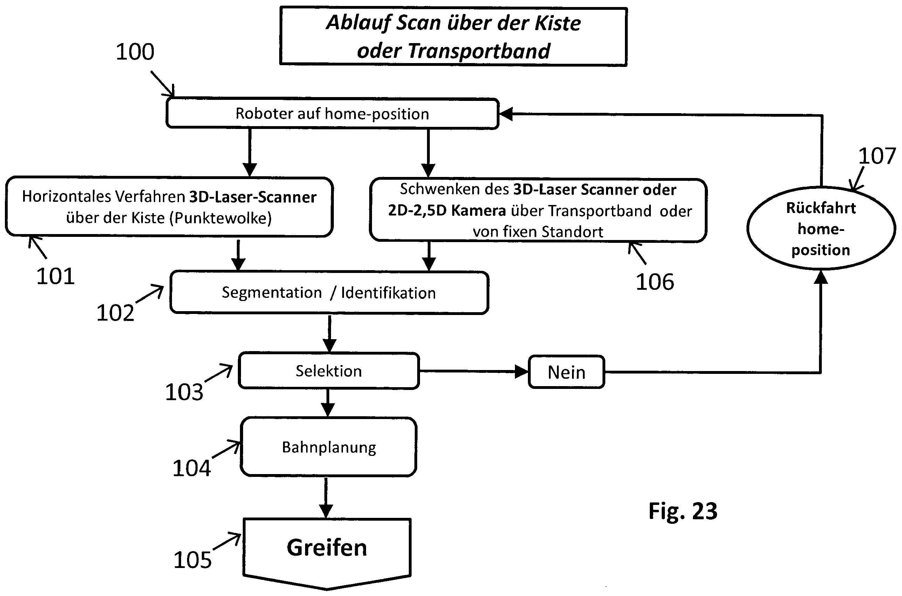

Figur 23 (Ablauf Scan über der Kiste oder Transportband) zeigt dabei den Ablauf des Erfassens der Werkstücke in einem Ausführungsbeispiel der vorliegenden Erfindung, und zwar sowohl für den Fall, dass ungeordnet in einem Behälter angeordnete Werkstücke erfasst werden, als auch ungeordnet auf einer Zwischenstation angeordnete Werkstücke erfasst werden.

In Schritt 100 (Roboter auf home-position) befindet sich das System in einem Ausgangszustand. Insbesondere kann der Greifer zum Greifen der Werkstücke in diesem Ausgangszustand außerhalb des Erfassungsbereiches angeordnet sein. Der Greifer kann hierfür entweder in einer Parkposition abgestellt werden, oder in einem Bereich außerhalb des Erfassungsbereiches Tätigkeiten ausführen, wie beispielsweise ein bereits gegriffenes Werkstück ablegen.

Nun erfolgt in Schritt 101 (Horizontales Verfahren 3D-Laser-Scanner über der Kiste (Punktewolke)) bzw. 106 (Schwenken des 3D-Laser Scanner oder 2D-2,5D Kamera über Transportband oder von fixen Standort) eine Messung durch die Sensoren der Objekterkennungseinrichtung. Hierfür kann im Ausführungsbeispiel insbesondere ein 3D-Laser-Scanner eingesetzt werden. Bei dem im Ausführungsbeispiel zum Erfassen der Werkstücke im Behälter eingesetzten 3D-Laser-Scanner wird dieser zunächst in eine Messposition über dem Behälter verfahren, von wo aus der Scanner über den Erfassungsbereich geschwenkt wird. Alternativ wäre auch ein Erfassen während der horizontalen Verfahrbewegung des 3D-Laser-Scanners möglich. Bei dem Erfassen der Werkstücke auf der Zwischenstation gemäß Schritt 106 ist der Sensor dagegen fest installiert, wobei er durch Schwenken über den Erfassungsbereich geschwenkt wird.

Alternativ zum Einsatz eines 3D-Laser-Scanners könnte auch ein Kamerasystem oder eine Kombination aus einem Kamerasystem und einem Laser-Scanner zum Einsatz kommen. Insbesondere kommt dabei auch eine 2D- oder 2,5D-Erfassung mittels einer Kamera in Frage.

In Schritt 102 (Segmentation/Identifikation) werden nun die Daten ausgewertet und die Werkstücke identifiziert.

Die identifizierten Werkstücke werden im Hinblick auf ihre Lage zueinander ausgewertet. Insbesondere wird dabei ermittelt, welche Werkstücke am höchsten liegen und welche Werkstücke durch andere Werkstücke zumindest teilweise abgedeckt sind. Hierdurch wird eine Selektion für die Entscheidung, welches Teil sich zum Greifen eignet, vorbereitet.

Im Schritt 103 (Selektion) wird nun eine Entscheidung getroffen, welches Teil im nächsten Schritt gegriffen werden soll. Ist dies anhand der vorhandenen Daten nicht möglich, so kann in einem neuen Zyklus nochmals eine Erfassung vorgenommen werden, wofür das System in Schritt 107 (Rückfahrt home-position) zurück in den Ausgangszustand 100 fährt.

Wurde dagegen ein Werkstück ausgewählt, so erfolgt in Schritt 104 (Bahnplanung) eine Bahnplanung für den Greifer. Die ermittelten Parameter des zu greifenden Teiles, welche die Lage und Raumanordnung des Teiles beschreiben, werden als Basis für die Bahnplanung herangezogen. Das System kennt dabei seinen aktuellen Standort und die Zielkoordinaten. Der Weg, die sogenannte Bahn, kann dann mit Hilfe der ermittelten Raumdaten berechnet werden.

Vorteilhafterweise erfolgt dabei auch eine Kollisionsidentifikation, bei welcher der Greifer sowie der Behälter durch geometrische Daten dargestellt und die geplante Bahn simuliert wird, um so eventuelle Kollisionen vorab zu ermitteln und bei der Bahnplanung durch Ermittlung eines Alternativweges auszuschließen.

Anhand der so berechneten Daten erfolgt dann in Schritt 105 (Greifen) das Ansteuern des Greifers und das Greifen eines Werkstückes.

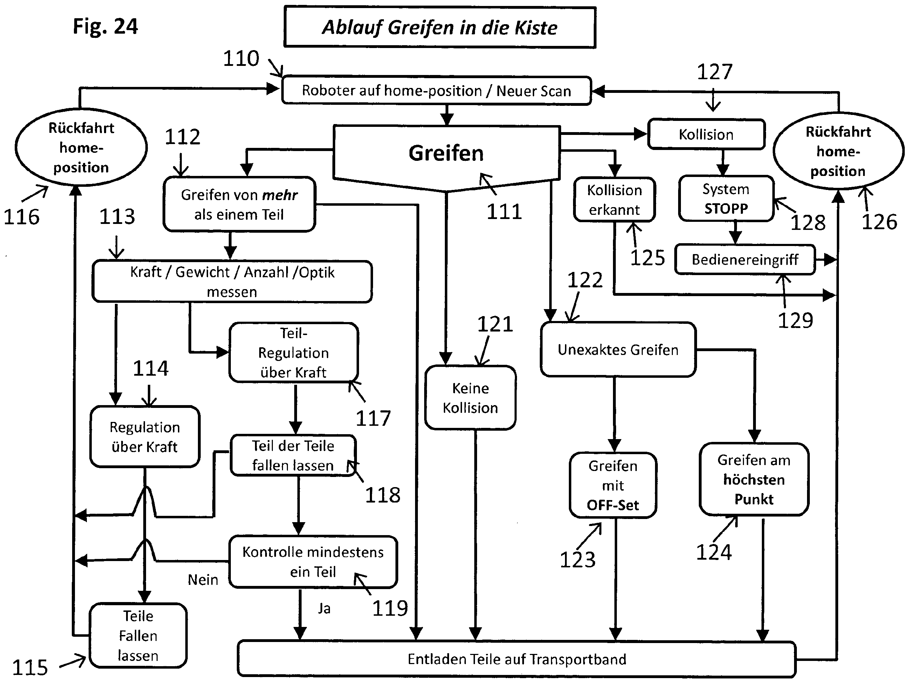

Bevor nun anhand von Figuren 24 (Ablauf Greifen de Kiste) und 25 (Ablauf Griff vom Transportband) die unterschiedlichen Greifstrategien gemäß der vorliegenden Erfindung nebeneinander dargestellt werden, sollen noch einmal überblicksmäßig die Möglichkeiten zum Aufbau einer erfindungsgemäßen Vorrichtung, durch welche die entsprechenden Strategien umgesetzt werden können, dargestellt werden:
Eine Vorrichtung gemäß der vorliegenden Erfindung umfasst zwei Greifer. Ein erster Greifer wird eingesetzt, um die Teile aus der Kiste grob zu greifen. Ein zweiter Greifer ist für das präzise Greifen und Vereinzeln auf einer Zwischenstation, welche insbesondere mit einem Transportband ausgerüstet sein kann, vorgesehen. Der zweite Greifer legt die Werkstücke auf eine weitere Zwischenstation oder auf eine Zielaufnahme für eine Mess- oder Arbeitsbehandlung der Werkstücke. Welcher Typ Greifer zum Einsatz kommt, hängt von der Geometrie, dem Aufbau, der Größe und/oder dem Gewicht der zu greifenden Werkstücke ab, und/oder von der Anzahl von Greifzonen und der Geometrie und dem Aufbau der Greifzone.

Die Werkstücke können jedoch ggf. miteinander verhaken, übereinander liegen oder auch stecken bleiben. Sie können Greifzonen besitzen, die für ein gezieltes Greifen aus der Kiste nicht ausreichen, da sie in gewissen Positionen, welche sie in der Kiste mit mehreren Teilen einnehmen können, nicht ausreichend zugänglich sind. Besitzen die Teile dabei eventuell nur eine bestimmte Greifzone, so stellt sich ein gezieltes direktes Greifen mit einem mechanischen Greifer als nicht ausreichend zuverlässig dar, und ist zudem langsam und störanfällig.

In einem bevorzugten Fall handelt es sich bei dem ersten Greifer daher um einen Magnetgreifer, und bei dem zweiten Greifer um einen mechanischen Greifer.

Die Verwendung eines Magnetgreifers für den Griff in die Kiste bzw. den Behälter hat den Vorteil, dass kein exaktes Greifen in eine präzise Greifzone notwendig ist. Weiterhin ist bei einem Magnetgreifer üblicherweise ein Greifen an unterschiedlichen Greifpunkten eines Werkstückes möglich. Insbesondere ist üblicherweise auch ein Greifen am höchsten Punkt des Werkstückes möglich. Weiterhin kann bei einem Magnetgreifen ein gleichzeitiges Greifen mehrerer Teile möglich sein, um diese auf der Zwischenstation abzulegen. Insbesondere ist so durch den Einsatz eines Magnetgreifers eine schnelle und hundertprozentige Entleerung der Kiste möglich.

Ein mechanischer Greifer hat den Vorteil, dass das Teil präzise in einer Greifzone greifbar ist, so dass das Werkstück anschließend in einer definierten Position einzeln auf oder in eine Aufnahmestation abgelegt werden kann. Bei der Aufnahmestation kann es sich dabei um die Aufnahmestation einer weiteren Zwischenstation handeln, oder um die Zielaufnahme einer Mess- oder Bearbeitungsstation. Ebenso kann das Werkstück auf einer Zwischenstation abgelegt werden, welche als Pufferstation oder Entmagnetisierungs- oder Vermessungsstation dient.

Der bevorzugte Fall einer Kombination aus einem magnetischen ersten Greifer und einem mechanischen zweiten Greifer kommt insbesondere bei Werkstücken mit einer lageorientierten Greifzone und/oder einer asymmetrischen, symmetrischen oder rotationssymmetrischen Kontur mit entsprechenden Größe und Gewicht zum Einsatz. Selbstverständlich kann ein magnetischer Greifer dabei nur dann eingesetzt werden, wenn das Werkstück von einem magnetischen Greifer gegriffen werden kann, also beispielsweise aus Metall besteht.

Dabei legt der Magnetgreifer die Werkstücke auf einer Zwischenstation ab, wo sie erneut erfasst werden, so dass sie nun gezielt durch den mechanischen Greifer gegriffen und dann auf eine Bearbeitungsstation, Messeinrichtung oder ein Transportband abgelegt werden können.

Folgende weitere Kombinationen für die Ausgestaltung von erstem und zweitem Greifer sind ebenfalls denkbar: mechanisch/mechanisch, pneumatisch/mechanisch, mechanisch/pneumatisch, pneumatisch/pneumatisch und magnetisch/pneumatisch. Auch beliebige andere Kombinationen mechanisch und/oder pneumatischer und/oder magnetischer Greifer sind denkbar.

Die Greifer können dabei jeweils entweder durch einen Roboterarm, oder ein Lindear- oder Flächenportal bewegt werden. Optional können die jeweiligen Greifer mit einer Ausgleichseinheit und/oder mit einem Kraftmomentensensor kombiniert werden, je nachdem, welche Strategien beim Greifen eingesetzt werden sollen. Die Ausgleichseinheit verbessert dabei die Systemsicherheit, indem sie bei Kollisionen die Notwendigkeit eines Bedienereingriffes verhindert.

Die Zwischenstation weist ein Transportband auf, welches die Werkstücke von dem Ablegebereich in einen Entnahmebereich transportiert. Dabei werden die abgelegten Teile über eine Werkstückrutsche zum Transportband befördert. Damit die durch den Magnetgreifer abgelegten Teile möglichst optimal auf dem Transportband zu liegen kommen, wird das Transportband durch schräge Bleche begrenzt, welche auf den Rand des Transportbandes rutschende Werkstücke zurück aufs Band rutschen lassen. Gleichzeitig kann noch eine von den Werkstücken bewegbare Klappe, insbesondere ein schwenkbares Blech oder ein Querbalken über dem Transportband installiert werden, damit übereinander liegende Teile noch vereinzelt werden bzw. nicht korrekt positionierte Teile umkippen. Hierdurch können die Werkstücke vom Scanner oder der Kamera besser erfasst werden und besser gegriffen werden.

Die Erfindung umfasst dabei folgende Verfahren, welche insbesondere beim Betrieb einer erfindungsgemäßen Vorrichtung durchgeführt werden können:
Aussortieren von Werkstücken:
Wird der erste Greifer mit einem Kraftmomentensensor kombiniert, so kann an dieser Stelle bereits eine Selektion nach Gewicht der Werkstücke vorgenommen werden. Insbesondere können Werkstücke, welche außerhalb eines spezifischen Limits bezüglich des Gewichtes liegen, aussortiert werden. Insbesondere können diese in einen Aussortierungsbehälter aussortiert werden.

Ein Aussortieren durch den ersten Greifer ist auch dadurch möglich, dass Werkstücke, welche bei der Erfassung als außerhalb einer vorgegebenen Spezifikation liegend erkannt werden, aufgenommen und statt auf der Zwischenstation in einen Aussortierungsbehälter abgelegt werden.

Werkstücke, welche auf der Zwischenstation erfasst werden und welche außerhalb einer vorgegebenen Spezifikation liegen, können aussortiert werden. Insbesondere kann dies durch einen Weitertransport solcher Werkstücke in einen Aussortierungsbehälter am Ende des Transportbandes erfolgen.

Ebenso ist es denkbar, ein gerade gegriffenes Teil an eine Vermessungseinrichtung zu halten, wo z. B. Geometrien, Oberflächen (bspw. eine Lackierung) und/oder Markierungen (z.B. durch Codes) nachvermessen und/oder kontrolliert werden können. Zeigt diese Messung an, dass ein Teil in einer vorgegebenen Spezifikation liegt, so wird das gegriffene Teil normal abgelegt, bspw. auf der Zwischenstation oder einer Zielaufnahme. Liegt es außerhalb der Spezifikation, so wird es aussortiert.

Verhinderung von Systemstopps:
Ein Systemstopp kann durch das Greifen mit einem Offset verhindert werden, bei welchem der Greifer die optimale Greifposition leicht verfehlt. In diesem Fall fährt der Greifer ca. 25 mm zurück und fährt erneut an, um dieses Mal präziser zu greifen.

Weiterhin kann über einen Kraftmomentensensor erkannt werden, wenn zu viele Teile auf einmal gegriffen wurden. Insbesondere wenn hierdurch die Maximalbelastung des Roboters überschritten werden könnte, kann die Belastung durch ein Abfallenlassen der Werkstücke zurück in den Behälter reduziert werden. Die am Greifer verbleibenden Teile können dann auf der Zwischenstation entladen werden.

Kommt es auf der Zwischenstation zu der Situation, dass die Objekterkennungseinrichtung das Teil nicht genau erfassen kann, da die Teile z. B. übereinander liegen und nicht genau erfasst werden können, oder dass ein Greifen nicht möglich ist oder nur mit unzureichender Genauigkeit erfolgt, können folgende Strategien eingesetzt werden:
Zum einen kann ein weiteres, tiefer liegendes Transportband eingesetzt werden, auf welchem die nicht gegriffenen Teile weiterfahren, um so die notwendige Position durch das Fallen über eine Stufe einzunehmen. Das Werkstück erhält so eine zweite Chance und wird wieder dem Transportband zum präzisen Greifen zugeführt (Loop 2). Hierbei kann, z. B. bei kleineren Teilen, die ineinander verhaken können, zudem vorgesehen sein, dass die umlaufend geführte Transportstrecke Vereinzelungseinrichtungen aufweist, welche die einzelnen Teile auseinanderzieht und hierdurch vereinzelt. Hierzu können beispielsweise Bleche oder Querbalken, die das Transportband verengen und/oder die Werkstücke streifen, eingesetzt werden.

Werden die Teile zwar gegriffen, kommt es jedoch zu keinem exakten Greifen, so kann dies über einen Sensor registriert werden. Hierzu kann beispielsweise ein Pneumatikzylinder am mechanischen Greifer vorgesehen sein. Dieser erkennt nicht nur die Greifposition innerhalb eines notwendigen Limits für eine anschließend genaue Ablage des Teiles, sondern hat auch eine Stabilisation des Teiles beim Greifen zur Folge. Bei einem erkannten nicht exakten Greifer kann der zweite Greifer das Werkstück zurück auf einen vorderen Teil des Transportbandes der Zwischenstation legen. Auch so erhält das Teil eine zweite Chance zum exakten Greifen (Loop 1).

Beim Greifen eines Werkstückes aus einem Behälter können die oben genannten Strategien insbesondere zu dem in Figur 24 dargestellten Ablauf kombiniert werden:
Dabei befindet sich das System in Schritt 110 (Roboter auf home-position / Neuer Scan) in einem Grundzustand, in welchem dem Greifer die von der Bahnplanung berechnete Bahn vorgegeben wird. In Schritt 111 (Greifen) erfolgt dann der Versuch eines Greifens anhand der berechneten Bahnplanung.

Wird in Schritt 112 (Greifen von mehr als einem Teil) mehr als ein Werkstück gegriffen, so hängt das weitere Vorgehen davon ab, ob dies durch einen Sensor erkannt werden kann. Ist dies nicht der Fall, werden die Werkstücke schlicht auf dem Transportband entladen. Andernfalls ist es möglich, in Schritt 113 (Kraft / Gewicht / Anzahl / Optik messen) eine Messung im Hinblick auf Kraft, Gewicht, Anzahl oder Optik durchzuführen. Insbesondere kann hierbei ein Kraftmomentensensor eingesetzt werden. Alternativ kann hier auch ein 3D-Laser oder eine 2D- oder 2,5D-Kamera eingesetzt werden. Nun erfolgt durch Erkennung von vorgegebenen Grenzen eine Entscheidung, ob zu viele Teile aufgenommen wurden. Wenn zu viele Teile aufgegriffen wurden, kann entweder in Schritt 114 (Regulation über Kraft) durch ein Ausschalten oder Reduzieren der Greifkraft des Greifers ein Fallenlassen sämtlicher Teile zurück in die Kiste erfolgen. Nach diesem Schritt 115 (Teile fallen lassen) erfolgt ein komplett neuer Greifvorgang inklusive Erfassung der Teile. Alternativ kann in Schritt 117 (Teil-Regulation über Kraft) eine Teilregulation durch teilweises Reduzieren der Kraft des Greifers und damit in Schritt 118 (Teil der Teile fallen lassen) ein teilweises Fallenlassen der Werkstücke zurück in die Kiste erfolgen. Im Schritt 119 (Kontrolle mindestens ein Teil) kann dabei nochmals überprüft werden, ob mindestens ein Teil anhängt. Wenn ein solches Teil anhängt, kann dieses in Schritt 120 (Entladen Teile auf Transportband) auf der Zwischenstation abgeladen werden. Hängt kein Teil an, kann direkt mit einem neuen Greifzyklus begonnen werden (Schritt 116 (Rückfahrt home-position).

Wird bei der Messung dagegen direkt erkannt, dass nur ein Teil anhängt, kann dieses direkt entladen werden. Wird bei der Messung erkannt, dass überhaupt kein Teil aufgenommen wurde, kann direkt mit einem neuen Greifzyklus begonnen werden (Schritt 116 (Rückfahrt home-position).

In Schritt 122 (Unexaktes Greifen) ist dargestellt, wie vorgegangen werden kann, wenn ein zentriertes Greifen nicht möglich ist. In diesem Fall sucht sich der Greifer entweder den höchsten Punkt des ausgewählten Teiles und greift in Schritt 124 (Greifen am höchsten Punkt) nochmals an diesen Punkt, oder er greift in Schritt 123 (Greifen mit OFF-Set) mit einem Offset, d. h. er fährt ca. 25 mm vom Teil zurück und fährt erneut das Teil an.

Alternativ kann eine solche Entscheidung bereits erfolgen, wenn bei der Auswahl des zu greifenden Werkstückes erkannt wird, dass keines der Werkstücke zentriert greifbar ist. In diesem Fall kann bereits bei der Bahnplanung ein Greifen mit einem Offset geplant werden, bei welchem sich Greiffläche und Hauptfläche des Werkstückes nicht komplett überlappen, oder ein Greifen am höchsten Punkt.

Das System kann dabei wie folgt mit Kollisionen umgehen: Erfolgt wie in Schritt 121 (Keine Kollision) keine Kollision, so können die Werkstücke auf der Zwischenstation abgeladen werden. Wird dagegen in Schritt 125 (Kollision erkannt) eine Kollision beispielsweise durch ein Kraftmomentensensor und/oder eine Ausgleichseinheit erkannt, so erlaubt die Steuerung noch einen definierten Verfahrweg. Wird auch diese überschritten, wird der Greifvorgang abgebrochen und das System beginnt mit einem neuen Greifzyklus (Schritt 126 (Rückfahrt home-Position)). Wird die Kollision in Schritt 127 (Kollision) dagegen erst durch die Notausfunktion des Roboters erkannt, führt dies in Schritt 128 (System STOPP) zu einem Systemstopp, welcher erst durch einen Bedienereingriff 129 (Bedienereingriff) wieder aufgehoben werden kann.

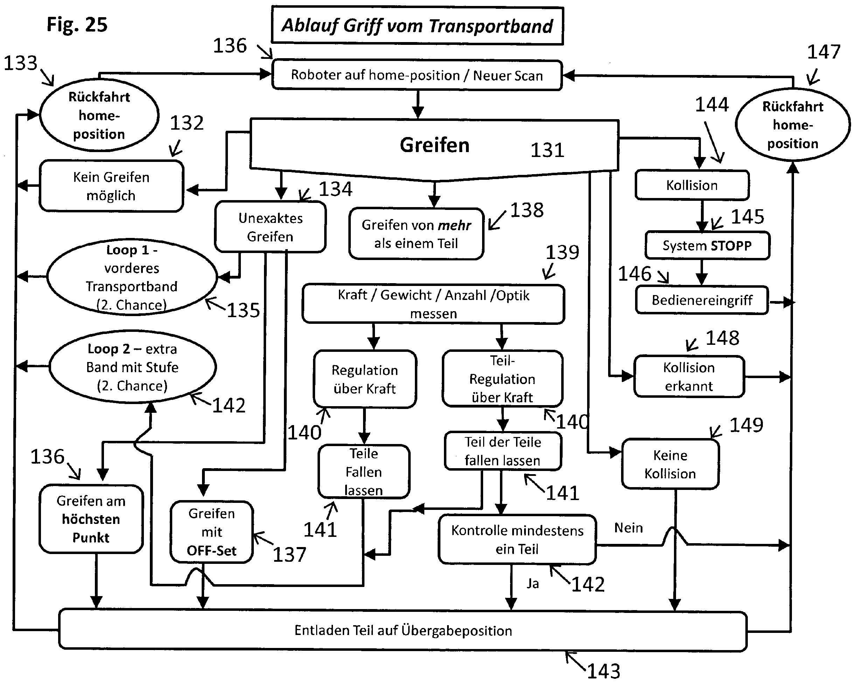

Beim Greifen eines Werkstückes von der Zwischenstation, und insbesondere von dem Transportband der Zwischenstation, können die Strategien insbesondere zu dem in Figur 25 dargestellten Ablauf kombiniert werden:
Zunächst fährt in Schritt 130 (Roboter auf home-position / Neuer Scan) ein Werkstück auf dem Transportband in den Erkennungsbereich der Objekterkennungseinrichtung und das Transportband hält an. Dann wird die Erkennung durchgeführt, insbesondere ein Scannen durch einen 3D-Laser-Scanner. Dieser kann schwenkbar, oder vertikal oder horizontal verfahrbar oder an einem fixierten Standpunkt über dem Transportband angeordnet sein. Alternativ kann eine Aufnahme eines Bildes über eine 2D-, 2,5D- oder 3D-Kamera erfolgen. Nach der Auswertung der Daten und der entsprechenden Bestimmung einer Bahn für den Greifer, wie sie bereits zuvor beschrieben wurde, erfolgt dann in Schritt 131 (Greifen) das Greifen.

Das Greifen von mehr als einem Teil in Schritt 138 (Greifen von mehr als einem Teil) kann die gleiche Vorgehensweise auslösen wie beim Greifen aus einem Behälter. Wird dabei ein mechanischer Greifer eingesetzt, bleibt jedoch lediglich die Möglichkeit, in Schritten 140 ((Teil)-Regulation über Kraft) und 141 ((Teil der) Teile fallen lassen) sämtliche Teile fallen zu lassen.

Auch das Vorgehen im Falle einer Kollision in Schritten 148 (Kollision erkannt) bzw. 144 (Kollision) ist identisch zu dem Vorgehen beim Greifen aus einem Behälter.

Bei einem unexakten Greifen in Schritt 134 (Unexaktes Greifen) kann ebenfalls so vorgegangen werden wie dies im Hinblick auf die entsprechenden Schritte in Figur 23 dargestellt wurde. Diese Strategien können insbesondere dann zum Einsatz kommen, wenn als zweiter Greifer ein Magnetgreifer zum Einsatz kommt.

Weiterhin kann dann, wenn die Greifgenauigkeit in Schritt 134 (Unexaktes Greifen) nicht ausreicht, das Teil in Schritt 135 erneut auf den vorderen Teil des Transportbandes abgelegt werden (Loop 1 - vorderes Transportband (2.Chance)), so dass das Werkstück erneut erfasst und gegriffen werden kann.

Ist keine Erkennung möglich oder kann kein Werkstück gegriffen werden, dann kann das Werkstück bei einer entsprechenden Ausgestaltung der Zwischenstation in Schritt 142 über eine Rücklaufstrecke erneut auf das Transportband befördert werden, sodass eine erneute Chance zum Greifen besteht (Loop 2 - extra Band mit Stufe (2. Chance)). Anderenfalls muss das nicht greifbare Werkstück in einen Aussortierbehälter verfahren werden.

Fig. 25 zeigt weiterhin folgende Schritte:
Schritt 133 / 147 (Rückfahrt home-position)
Schritt 132 (Kein Greifen möglich)
Schritt 136 (Greifen am höchsten Punkt)
Schritt 137 (Greifen mit OFF-Set)
Schritt 139 (Kraft / Gewicht / Anzahl / Optik messen)
Schritt 142 (Kontrolle mindestens ein Teil)
Schritt 143 (Entladen Teil auf Übergabeposition)
Schritt 145 (System STOPP)
Schritt 146 (Bedienereingriff)
Schritt 149 (Keine Kollision)

Die vorliegende Erfindung ermöglicht durch die oben dargestellten Vorrichtungen und Verfahren eine Handhabung der Werkstücke mit schnellen Taktzeiten, kleinen Fehlerquoten und großer Genauigkeit beim Greifen. Hierbei ergibt sich eine hohe Prozesssicherheit durch die Vermeidung von Systemstillständen, welche einen Bedienereingriff erfordern würden. Weiterhin ermöglicht die vorliegende Erfindung eine 100 prozentige Entleerung der Behälter.

## Patentansprüche

1. Vorrichtung zum automatisierten Entnehmen von in einem Behälter angeordneten Werkstücken,
mit einer ersten Objekterkennungseinrichtung (30) zum Erfassen der Werkstücke und einem ersten Greifer (34) zum Greifen und Entnehmen der Werkstücke aus dem Behälter,
einer Steuerung zur Auswertung der Daten der ersten Objekterkennungseinrichtung (30), zur Pfadplanung und zur Ansteuerung des ersten Greifers (34), einer Zwischenstation, auf welcher der erste Greifer (34) die Werkstücke nach dem Entnehmen aus dem Behälter ablegt, und
einer Positioniervorrichtung, welche die Werkstücke ausgehend von der Zwischenstation genauer positioniert und/oder vereinzelt, wobei die Positioniervorrichtung einen zweiten Greifer (41) zum Abnehmen der Werkstücke von der Zwischenstation umfasst,
**dadurch gekennzeichnet,**
**dass** die Zwischenstation eine Transporteinrichtung (38) aufweist, welche die Werkstücke von einem Ablegebereich (35) zu einem Entnahmebereich (44) transportiert, in welchem die Werkstücke durch den zweiten Greifer (41) gegriffen und von der Zwischenstation abgenommen werden.

2. Vorrichtung nach Anspruch 1, wobei es sich bei dem ersten Greifer (34) zum Greifen des Werkstückes im Behälter um einen magnetischen und/oder pneumatischen Greifer handelt und/oder wobei der Greifer gekröpft an einem Greifarm angeordnet ist.

3. Vorrichtung nach Anspruch 1 oder 2, wobei die Steuerung so ausgeführt ist, dass der erste Greifer (34) für den Fall, dass er ein Werkstück mit einer ersten zum Greifen berechneten Position nicht aufnehmen kann, das Greifen mit mindestens einer zweiten, veränderten Position wiederholt und/oder wobei die Steuerung für den Fall, dass kein Werkstück mit einer vorbestimmten optimalen Griffposition zwischen Werkstück und erstem Greifer (34) gegriffen werden kann, auf eine zweite Griffposition zurückgreift.

4. Vorrichtung nach einem der vorangegangenen Ansprüche, mit einer zweiten Objekterkennungseinrichtung (42) zum Erfassen der Werkstücke auf der Zwischenstation, wobei die zweite Objekterkennungseinrichtung (42) vorteilhafterweise in dem Entnahmebereich (44) der Zwischenstation angeordnet ist.

5. Vorrichtung nach einem der vorangegangenen Ansprüche, wobei die Steuerung den ersten Greifer (34) zum Ablegen der Werkstücke auf der Zwischenstation so ansteuert, dass er die Werkstücke aus einer gewissen Höhe auf den Ablegebereich (35) der Zwischenstation fallen lässt.

6. Vorrichtung nach einem der vorangegangenen Ansprüche, wobei der Ablegebereich (35) der Zwischenstation eine schräge Ebene umfasst.

7. Vorrichtung nach einem der vorangegangenen Ansprüche, mit einem Höhensensor (37) zum Erkennen der Entfernung eines am ersten Greifer (34) angeordneten Werkstückes von dem Ablegebereich (35) in Höhenrichtung, insbesondere zum Erkennen der Höhe des Werkstückes über der schrägen Ebene, wobei es sich insbesondere um eine seitlich am Ablegebereich angeordnete Lichtschrankenanordnung handelt.

8. Vorrichtung nach einem der vorangegangenen Ansprüche, wobei es sich bei der Transporteinrichtung (38) zum Weitertransport der Werkstücke weg von dem Ablegebereich (35) um ein Transportband handelt, und/oder wobei das Erfassen der Werkstücke und/oder das Abnehmen der Werkstücke durch den zweiten Greifer auf bzw. von der Transporteinrichtung (38) erfolgt.

9. Vorrichtung nach Anspruch 1 oder 8, wobei die Transporteinrichtung (38) mit einem mechanischen Umorientierungs-Einrichtung ausgestattet ist, welche die Position von Werkstücken beim Transport von dem Ablegebereich (35) zum Entnahmebereich (44) zumindest zum Teil verändert und/oder die Werkstücke grob vorpositioniert, wobei die Umorientierungs-Einrichtung vorteilhafterweise eine Klappe und/oder einen Balken aufweist, welche bspw. quer zur Transportrichtung (38) über die Transporteinrichtung (38) verlaufen können.

10. Vorrichtung nach einem der vorangegangenen Ansprüche, wobei die Zwischenstation mit einem Belegungssensor (39) ausgestattet ist, um die Belegung des Ablegebereichs (35) und/oder der Transporteinrichtung (38) und/oder des Entnahmebereichs (44) zu erfassen, wobei der Belegungssensor (39) insbesondere eine Lichtschranke umfasst, wobei die Lichtschranke vorteilhafterweise seitlich am Ablegebereich (35) und/oder an der Transporteinrichtung (38) und/oder am Entnahmebereich (44) angeordnet ist und/oder wobei das Ablegen von Werkstücken auf die Zwischenstation gestoppt wird, wenn eine zu hohe Beladung erkannt wird.

11. Vorrichtung nach einem der vorangegangenen Ansprüche, wobei der erste und/oder der zweite Greifer (34, 41) durch einen Greifarm (15) bewegt werden, wobei es sich vorteilhafterweise um einen Roboterarm eines 6-achsigen Roboters (10) oder um einen an einem Flächen- oder Linearportal (21 - 23) angeordneten Greiferarm handelt.

12. Verfahren zum automatisierten Entnehmen von in einem Behälter angeordneten Werkstücken unter Verwendung einer Vorrichtung nach einem der Ansprüche 1 bis 11, mit den Schritten:
- Erfassen der Werkstücke,
- Greifen mindestens eines Werkstückes mit dem ersten Greifer (34),
- Entnehmen des Werkstückes aus dem Behälter,
wobei die Werkstücke nach dem Entnehmen aus dem Behälter auf einer Zwischenstation abgelegt werden, von welcher aus die Werkstücke durch mindestens einen weiteren Positionier-Schritt mittels des zweiten Greifers (41) genauer positioniert und/oder vereinzelt werden.

## Claims

1. Apparatus for the automated removal of workpieces arranged in a container, comprising a first object recognition device (30) for detecting the workpieces and a first gripper (34) for picking and removing the workpieces from the container,
a control for evaluating the data of the first object recognition device (30), for path planning and for controlling the first gripper (34),
an intermediate station on which the first gripper (34) places the workpieces after the removal from the container, and
a positioning device which positions the work pieces more accurately and/or singularizes the workpieces starting from the intermediate station, wherein the positioning device comprises a second gripper (41) for removing the workpieces from the intermediate station,
**characterized in that**
the intermediate station comprises a transport device (38) which transports the workpieces from a placing region (35) to a removal region (44), in which the workpieces are gripped by the second gripper (41) and removed from the intermediate station.

2. Apparatus in accordance with claim 1, wherein the first gripper (34) for picking the workpiece in the container is a magnetic and/or pneumatic gripper, and/or wherein the gripper is arranged on a gripper arm in a cropped manner.

3. Apparatus in accordance with claim 1 or 2, wherein the control is configured in such a way that, in the event that the first gripper (34) cannot pick up a workpiece with a first position calculated for picking, the first gripper repeats the picking with at least one second, changed position and/or wherein the control, in the event that no workpiece can be picked with a predefined ideal picking position between the workpiece and the first gripper (34), makes use of a second picking position.

4. Apparatus in accordance with one of the preceding claims, comprising a second object recognition device (42) for detecting the workpieces on the intermediate station, wherein the second object recognition device (42) advantageously is arranged in the removal region (44) of the intermediate station.

5. Apparatus in accordance with one of the preceding claims, wherein the control controls the first gripper (34) for placing the workpieces on the intermediate station such that it drops the workpieces onto the placing region (35) of the intermediate station from a certain height.

6. Apparatus in accordance with one of the preceding claims, wherein the placing region (35) of the intermediate station comprises a slanted plane.

7. Apparatus in accordance with one of the preceding claims, comprising a height sensor (37) for detecting the distance of a workpiece, which is arranged in a first gripper (34), from the placing region (35) in the height direction, in particular for detecting the height of the workpiece over the slanted plane, wherein, in particular, it is a light barrier arrangement arranged laterally at the placing region.

8. Apparatus in accordance with one of the preceding claims, wherein the transport device (38) for transporting the workpieces further away from the placing region (35) is a transport belt, and/or wherein the detection of the workpieces and/or the removal of the workpieces on or from the transport device (38) is effected by the second gripper.

9. Apparatus in accordance with claim 1 or 8, wherein the transport device (38) is equipped with a mechanical reorientation device which at least partly changes the position of workpieces on their way from the placing region (35) to the removal region (44) and/or roughly prepositions the workpieces, wherein the reorientation device advantageously comprises a flap and/or a bar which extends for example transversely to the transport direction (38) over the transport device (38).

10. Apparatus in accordance with one of the preceding claims, wherein the intermediate station is equipped with an occupation sensor (39) in order to detect the occupation of the placing region (35) and/or of the transport device (38) and/or of the removal region (44), wherein the occupation sensor (39) particularly comprises a light barrier, wherein advantageously the light barrier is arranged laterally at the placing region (35) and/or at the transport device (38) and/or at the removal region (44), and/or wherein placing of workpieces onto the intermediate station is stopped when the occupation is detected to be too high.

11. Apparatus in accordance with one of the preceding claims, wherein the first gripper and/or the second gripper (34, 41) is/are moved by a gripping arm (15), wherein the gripping arm advantageously is a robot arm of a 6-axial robot (10) or a gripper arm arranged at a surface portal or at a linear portal (21 - 23).

12. Method for the automated removal of workpieces arranged in a container using an apparatus in accordance with one of claims 1 to 11, comprising the steps:
- detecting the workpieces;
- picking at least one workpiece using the first gripper (34),
- removing the workpiece from the container,
wherein after the removal from the container, the workpieces are placed onto an intermediate station from where the workpieces are positioned more accurately and/or are singularized by at least one further positioning step using the second gripper (41).

## Revendications

1. Dispositif de retrait automatisé de pièces disposées dans un contenant,
avec un premier système d'identification d'objets (30) pour détecter les pièces et un premier grappin (34) pour saisir et retirer les pièces hors du contenant, une commande pour évaluer les données du premier système d'identification d'objets (30) pour planifier l'itinéraire et pour piloter le premier grappin (34),
un poste intermédiaire, sur lequel le premier grappin (34) dépose les pièces après le retrait hors du contenant, et
un dispositif de positionnement, lequel positionne et/ou trie les pièces plus précisément en partant du poste intermédiaire, dans lequel le dispositif de positionnement comprend un deuxième grappin (41) pour enlever les pièces du poste intermédiaire,
**caractérisé en ce**
**que** le poste intermédiaire présente un système de transport (38), lequel transporte les pièces depuis une zone de dépôt (35) vers une zone de retrait (44), dans laquelle les pièces sont saisies par le deuxième grappin (41) et sont enlevées du poste intermédiaire.

2. Dispositif selon la revendication 1, dans lequel le premier grappin (34) pour saisir la pièce dans le contenant est un grappin magnétique et/ou pneumatique et/ou le grappin est disposé de manière coudée sur un bras de préhension.

3. Dispositif selon la revendication 1 ou 2, dans lequel la commande est réalisée de telle sorte que le premier grappin (34) répète s'il ne peut pas recevoir une pièce avec une première position calculée pour la préhension, la préhension avec au moins une deuxième position modifiée et/ou dans lequel la commande a recours à une deuxième position de préhension si aucune pièce ne peut être saisie avec une position de préhension optimale prédéfinie entre la pièce et le premier grappin (34).

4. Dispositif selon l'une quelconque des revendications précédentes, avec un deuxième système d'identification d'objets (42) pour détecter les pièces sur le poste intermédiaire, dans lequel le deuxième système d'identification d'objets (42) est disposé avantageusement dans la zone de retrait (44) du poste intermédiaire.

5. Dispositif selon l'une quelconque des revendications précédentes, dans lequel la commande pilote le premier grappin (34) pour déposer les pièces sur le poste intermédiaire de telle sorte qu'il laisse tomber les pièces depuis une certaine hauteur sur la zone de dépôt (35) du poste intermédiaire.

6. Dispositif selon l'une quelconque des revendications précédentes, dans lequel la zone de dépôt (35) du poste intermédiaire comprend un plan oblique.

7. Dispositif selon l'une quelconque des revendications précédentes, avec un capteur de hauteur (37) pour identifier l'éloignement d'une pièce disposée sur le premier grappin (34) de la zone de dépôt (35) dans le sens de la hauteur, en particulier pour identifier la hauteur de la pièce au-dessus du plan oblique, dans lequel il s'agit en particulier d'un ensemble formant barrière lumineuse disposé latéralement sur la zone de dépôt.

8. Dispositif selon l'une quelconque des revendications précédentes, dans lequel le système de transport (38) pour le transport ultérieur des pièces de manière à s'éloigner de la zone de dépôt (35) est une bande transporteuse, et/ou dans lequel la détection des pièces et/ou l'enlèvement des pièces ont lieu par le deuxième grappin sur ou depuis le système de transport (38).

9. Dispositif selon la revendication 1 ou 8, dans lequel le système de transport (38) est équipé d'un système de réorientation mécanique, lequel modifie au moins en partie la position de pièces lors du transport depuis la zone de dépôt (35) vers la zone d'enlèvement (44) et/ou positionne au préalable sommairement les pièces, dans lequel le système de réorientation présente avantageusement une trappe et/ou une poutre, lesquelles peuvent s'étendre par exemple de manière transversale par rapport à la direction de transport (38) au-dessus du système de transport (38).

10. Dispositif selon l'une quelconque des revendications précédentes, dans lequel le poste intermédiaire est équipé d'un capteur d'occupation (39) pour détecter l'occupation de la zone de dépôt (35) et/ou du système de transport (38) et/ou de la zone d'enlèvement (44), dans lequel le capteur d'occupation (39) comprend en particulier une barrière lumineuse, dans lequel la barrière lumineuse est disposée avantageusement latéralement sur la zone de dépôt (35) et/ou sur le système de transport (38) et/ou sur la zone de retrait (44) et/ou dans lequel le dépôt de pièces sur le poste intermédiaire est arrêté quand une charge trop importante est identifiée.

11. Dispositif selon l'une quelconque des revendications précédentes, dans lequel le premier et/ou le deuxième grappin (34, 41) sont déplacés par un bras de préhension (15), dans lequel il s'agit avantageusement d'un bras robotisé d'un robot à 6 axes (10) ou d'un bras de préhension disposé sur un portique plat ou linéaire (21 - 23).

12. Procédé de retrait automatisé de pièces disposées dans un contenant en utilisant un dispositif selon l'une quelconque des revendications 1 à 11, avec les étapes :
- de détection des pièces,
- de préhension d'au moins une pièce avec le premier grappin (34),
- de retrait de la pièce hors du contenant,
dans lequel les pièces sont déposées après le retrait hors du contenant sur un poste intermédiaire, depuis lequel les pièces sont positionnées et/ou triées plus précisément par au moins une autre étape de positionnement au moyen du deuxième grappin (41).
